(19) Europäisches Patentamt

European Patent Office

Office européen des brevets

(11) **EP 4 211 025 B1**

(12) **EUROPEAN PATENT SPECIFICATION**

(45) Date of publication and mention
of the grant of the patent:
**09.10.2024 Bulletin 2024/41**

(21) Application number: **21773861.6**

(22) Date of filing: **08.09.2021**

(51) International Patent Classification (IPC):
**B62D 35/00** *(2006.01)*          **B62D 37/02** *(2006.01)*

(52) Cooperative Patent Classification (CPC):
**B62D 35/00; B62D 37/02;** B62D 35/001;
Y02T 10/82

(86) International application number:
**PCT/GB2021/052314**

(87) International publication number:
**WO 2022/053798 (17.03.2022 Gazette 2022/11)**

(54) **DRAG REDUCTION SYSTEM AND METHOD**

WIDERSTANDSVERMINDERUNGSSYSTEM UND -VERFAHREN

SYSTÈME ET PROCÉDÉ DE RÉDUCTION DE TRAÎNÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2020   US 202063075417 P
21.09.2020   GB 202014885
17.02.2021   GB 202102245
12.07.2021   GB 202110010**

(43) Date of publication of application:
**19.07.2023   Bulletin 2023/29**

(73) Proprietor: **Aero Truck Limited
Poole Dorset BH13 7NW (GB)**

(72) Inventor: **SANDGREN, Eric
Chesterfield, Virginia 23838 (US)**

(74) Representative: **Reddie & Grose LLP
The White Chapel Building
10 Whitechapel High Street
London E1 8QS (GB)**

(56) References cited:
**WO-A1-2017/072530      WO-A1-2019/155181
WO-A1-2019/179915**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 4 211 025 B1

**Description**

FIELD OF THE INVENTION

The invention relates to drag reduction in objects moving through a fluid, such as air or water.

The invention is particularly suitable as a drag reduction system and method for a vehicle moving through air.

The drag reduction system is particularly suitable for large vehicles moving through air, such as lorries, trucks, articulated lorry, tractor trailers, trailer trucks, rigs, semis, semitrailers, vans, delivery vehicles, trains, trams, streetcars, buses. The drag reduction system may also be suitable for vehicles moving through water, such as ships, submarines and other vessels travelling in or on the water.

BACKGROUND TO THE INVENTION

The wake formed behind a road-based vehicle is complex and its length may be many multiples of the vehicle length. The cross-sectional area of the wake also generally expands well beyond that of the vehicle. The wake is a complex, time dependent fluid flow phenomenon that has the general effect of producing a low pressure area that follows the vehicle. It contains both coherent and non-coherent vortex structures that contribute significantly to the building and expansion of the wake region behind the vehicle. The difference between the high pressure generated at the front of the vehicle and the low pressure wake region directly behind the vehicle exerts a net force which is opposite to the direction of motion of the vehicle. The energy required to form and sustain the wake must come from the vehicle power source, therefore the wake has a significant negative impact on the fuel consumption rate of the vehicle.

The drag caused by wakes, currents, and eddies, or rotating pockets of air, adjacent to vehicles has a significant impact on the efficiency of vehicle movement and energy use of the vehicles. Drag, especially at speeds above 30 km/hour, becomes increasingly important to fuel efficiency and remains a major concern for vehicle manufactures. As a result, much work has been expended on the aerodynamic design of vehicles to reduce drag and thereby increase fuel efficiency. It is known that minimising the low pressure area behind the vehicle, i.e. maximising the pressure behind the vehicle, has a positive impact on the fuel consumption rate of the vehicle.

Different eddy currents are generated at the trailing edge of a vehicle moving through air, some of which detach from the vehicle periodically, in particular Strouhal eddies.

Many drag reduction devices have been proposed in the technical and patent literature. The majority of the aerodynamic-alteration devices developed or proposed to date are fixed devices that actually interfere with normal operation of a vehicle, particularly with loading and unloading operations of vehicles that transport goods. Because they are fixed, previously proposed devices tended to function adequately only under optimal conditions; their effectiveness is negated by changing environmental conditions and road geometry. These devices included streamlining or boat tail add-on devices, fixed plate extensions at the rear of the vehicle, suction and blowing devices, flaps and fairings, underbody skirts and wedges, tractor/trailer gap flow control devices and, more recently, flapping devices to add energy content to the wake region at a specific frequency.

Many of these devices have been evaluated and tested by government laboratories and trucking associations. Considerable work, including a significant amount funded by the U.S. Department of Energy (DOE), has been performed on creating and evaluating drag reduction technologies for large trucks. One such major study was the DOE Project on Heavy Vehicle Aerodynamic Drag, which was conducted over a three year period. An on-road test of drag reduction concepts has been completed by the Truck Manufacturers Association in conjunction with the DOE.

A significant number of patents have been filed covering a wide range of concepts developed to date. However, none of these technologies have demonstrated the actual capability to achieve the benefits sought.

For example, US9937963B2 provides a drag reduction system in which the position of an eddy disrupter is adjusted based on signals received from a plurality of sensors. The position of the eddy disrupter is adjusted only if a threshold condition is satisfied. The adjustment of the eddy disrupter is controlled according to pre-programmed settings. For example, the eddy disrupter is adjusted according to pre-programmed parameters including a pressure differential between the front and the back of a vehicle and the speed of the vehicle, .

DE102018206305A1 provides a device for optimizing aerodynamic states of a vehicle by measuring a flow variable and adjusting an adjustable aerodynamic element. The position of the adjustable aerodynamic element is adjusted based on past measurements stored in a storage unit. This seeks to adjust a position of the aerodynamic element dynamically so that an optimized aerodynamic state of the vehicle is reached.

However, neither of these known systems allow for a fuel consumption rate to be optimised (i.e. fuel consumption to be minimised) independently of road conditions.

Drag reduction systems of the prior art are either fixed, so that they only improve fuel efficiency under specific conditions, or, more recently, they are flapping devices. These prior art flapping devices, like that which is disclosed in US9937963B2, interrupt the wake region at a specific frequency, i.e. a pre-set frequency.

Other dynamic prior art systems, such as that of DE102018206305A1, do not flap, but adjust the position of the adjustable aerodynamic element (i.e. the angle relative to a surface of a vehicle) based on previous data. While the system of DE102018206305A1 is purportedly capable of learning over time, the alleged reduction in aerodynamic drag is achieved by adjusting the aerodynamic element to vary the aerodynamic shape or profile of the vehicle. This system is limited to using previous data to control adjustment of the aerodynamic element.

WO 2019/155181 A1 provides a drag reduction apparatus for reducing the aerodynamic drag on a bluff body with a blunt trailing edge caused by fluid flow characteristics at the wake of the bluff body, the drag reduction apparatus comprising one or more control elements configured to be coupled to the bluff body and to be positioned asymmetrically relative to a direction of travel of the bluff body in response to a determined parameter of the bluff body to control fluid flow at the wake of the bluff body and reduce the drag experienced by the body.

WO 2017/072530 A1 provides a drag reduction apparatus for reducing the aerodynamic drag on a bluff body with a blunt trailing edge caused by fluid flow characteristics at the wake of the bluff body, the drag reduction apparatus comprising: one or more control elements configured to be coupled to the bluff body and to move with respect to the bluff body, whereby the movement of the one or more control elements controls fluid flow at the wake of the bluff body to reduce the drag caused by fluid flow instabilities and environmental asymmetries.

None of these prior art systems is capable of optimising the fuel efficiency of a vehicle under changing conditions.

The inventor has appreciated a need to improve the drag reduction systems previously developed. In particular, the inventor has appreciated the need for a novel and improved drag reduction system capable of improving a fuel consumption rate for any road geometry and environmental conditions, without prior knowledge of settings with the best aerodynamic effects. The inventor has appreciated that enhanced fuel efficiency may be achievable by using an aerodynamic control surface to supress the generation of periodic eddies, such as Strouhal eddies, in real-time.

## SUMMARY OF THE INVENTION

As used herein, the term "vehicle" is used to refer to any vehicle moving through air which may be an automobile, such as a truck or a car, a trailer, a plane, or a train.

As used herein, the term "optimisation" or "optimisation algorithm" is used to refer to a method which optimises the solution to a problem by selecting better candidate solutions and rejecting worse candidate solutions. As such, the term refers to genetic optimisation algorithms and random, directed searches.

As used herein, the term "genetic optimisation" or "genetic optimiser" is used to refer to a method which optimises the solution to a problem by iteratively improving candidate solution based on a given optimisation characteristic.

The present invention in a first aspect provides a drag reduction system for a vehicle, comprising at least one control surface movable relative to at least one surface of the vehicle; at least one actuator for adjusting a position of the at least one control surface relative to the at least one surface of the vehicle; at least one pressure sensor positioned so as to sense fluid pressure at, or near, a rear end surface of the vehicle; and a processor comprising an optimisation algorithm.

The processor comprising the optimisation algorithm is programmed to randomly generate a first generation of control surface adjustment parameters, wherein each one of the control surface adjustment parameters is generated within a pre-defined range; receive sensor data from the at least one pressure sensor; and compare a characteristic of the sensor data to a threshold condition.

Upon the threshold condition being satisfied, the processor comprising the optimisation algorithm is programmed to operate the at least one actuator so to adjust a position of the at least one control surface relative to the at least one surface of the vehicle based on at least two of the control surface adjustment parameters of the first generation; compare an optimisation characteristic of each of the at least two control surface adjustment parameters of the first generation to determine at least one preferred adjustment parameter; and populate a second generation of control surface adjustment parameters based on the at least one preferred adjustment parameter.

Upon the threshold condition not being satisfied, the processor comprising the optimisation algorithm is programmed to receive new sensor data from the at least one pressure sensor and compare a characteristic of the new sensor data with the threshold condition.

Advantageously, the drag reduction system may lead to a reduction in aerodynamic drag created by a vehicle moving through air. It may achieve this by supressing the generation of drag-inducing eddy currents, particularly Strouhal currents. In particular, the genetic optimisation algorithm may allow for the parameters according to which the control surface is adjusted to reduce eddy currents and thereby improve fuel efficiency to be optimised, while taking account of changing road geometry and environmental factors. None of the prior art drag reduction systems is capable of similar improvements of fuel efficiency.

The inventors of the present drag reduction system have appreciated that, by providing a processor having a optimisation algorithm which compares optimisation characteristics of at least two of the control surface adjustment parameters in immediate succession and then populates the second generation with a preferred control surface adjustment parameter, the flapping parameters of the control surface may be optimised even where the conditions, for example road geometry, change rapidly.

The drag reduction system uses an control surface to influence the pressure (i.e. maximise the pressure) behind a vehicle moving through a fluid by suppressing eddy generation to reduce the drag on the vehicle, and uses a optimisation algorithm to modify and improve the parameters according to which the control surface is moved to influence the pressure behind the vehicle. The parameters may be optimised independently of changing road conditions because the drag reduction system uses an optimisation algorithm.

The control surface may be deflected repeatedly upon the threshold condition being met.

The control surface may be oscillated at a constant frequency and/or a constant magnitude upon the threshold condition being met.

The control surface may be oscillated at a constant frequency and/or a constant magnitude about a constant centre point of oscillation upon the threshold condition being met.

The control surface may be flapped at a variable frequency and/or variable magnitude.

The control surface may be flapped relative to a variable centre point of flapping.

The control surface may be flapped relative to a variable first and/or a variable second end point of flapping / flap limit.

The optimisation algorithm may be considered a genetic optimisation algorithm, so that the term "generation", or "generation of parameters", refers to a plurality of control surface adjustment parameters. Each "generation" or "generation of parameters" comprises a predetermined number of "control surface adjustment parameters" which individually may be referred to as a "member" of the generation, or a "parameter" of the generation.

Each member of a generation may comprise more than a single parameter. For example, the flapping of the control surface (or control surface adjustment) may have more than one characteristic which defines each member of the generation.

In a preferred embodiment, the processor comprising an optimisation algorithm is further programmed to generate at least two vectors based on one or more of the control surface adjustment parameters of the first generation; and the at least one actuator is operated so to adjust a position of the at least one control surface relative to the at least one surface of the vehicle according to, in turn, each of the at least two vectors; an optimisation characteristic of each of the at least two vectors is compared to determine at least one preferred one of the at least two vectors; and the second generation of control surface adjustment parameters is populated with the at least one preferred one of the at least two vectors.

Advantageously, by providing a processor having an optimisation algorithm which compares the optimisation characteristic of the at least two vectors in immediate succession, and populating the succeeding generation with a better of the at least two vectors, the flapping parameters of the control surface may be optimised even where the conditions, for example road geometry, change rapidly.

As such, the programmed step of operating the at least one actuator so to adjust a position of the at least one control surface relative to the at least one surface of the vehicle based on at least two of the control surface adjustment parameters of the first generation is carried out by operating the at least one actuator so to adjust a position of the at least one control surface relative to the at least one surface of the vehicle according to, in turn, each of the at least two vectors, which are based on one or more of the control surface adjustment parameters of the first generation.

Preferably, at least two vectors are generated based on, in turn, each one of the first generation of parameters. Advantageously, this may allow for the optimisation process to be computationally efficient and effective, as each one of the members, or parameters, of the first generation of control surface adjustment parameters, is used to generate vectors which are evaluated for their optimisation characteristic.

Alternatively, at least two vectors are generated based on, in turn, only a subset of the first generation of parameters. This may advantageously introduce a further element of randomness into the optimisation process, which may improve the outcome of the optimisation.

At least one of the at least two vectors is, in preferred embodiments, generated using at least one of: a crossover operation; a combination operation; and a mutation operation.

The at least one of the at least two vectors is generated, in more preferred embodiments, by the crossover operation, wherein the crossover operation is performed on a target vector of a number of randomly selected ones of the first generation parameters and a different one of the first generation parameters. Advantageously, this may introduce a further element of randomness. This may allow the whole design space to be optimised and may avoid design parameters being trapped in a good but suboptimal design.

Preferably, the optimisation algorithm is a differential genetic optimisation algorithm. Advantageously, this may allow for the entire design space to be evaluated, without relying on gradient information. As road geometry (i.e. uphill, downhill, even, corners) has an overwhelming effect on fuel efficiency, in particular for heavy trucks, a differential optimisation algorithm may enable the drag reduction system to improve fuel efficiency under a range of conditions, without changes in road conditions (uphill, flat, downhill) causing poor design choices.

For example, a truck may run at 11.8 litres per 100 kilometres (20 MPG) when going downhill, but 47.0 litres per 100 kilometres (5 MPG) when going uphill. As the optimisation algorithm compares optimisation characteristics of design parameters which are evaluated in quick succession, design parameters are not compared to other design parameters which were evaluated under significantly different conditions. For example, an optimisation characteristic for a truck going uphill is not compared to an optimisation characteristic of a truck going downhill, such that good design parameters are not inadvertently considered to be bad because of changing road conditions.

The at least one actuator is preferably configured to adjust a position of the at least one control surface relative to the at least one surface of the vehicle between a first position, in which the at least one control surface is substantially parallel to the at least one surface of the vehicle, and a second position in which at least a portion of the at least one control surface extends outwardly from the one surface of the vehicle. Advantageously, this may allow for the control surface to disrupt eddy currents generated at the trailing edge of the vehicle, in particular, Strouhal eddies.

Preferably, the at least one control surface comprises an elongate control surface. The elongate control surface is more preferably one of: a panel; a tubular control surface; a flap; a wing. The shape of the control surface may allow for the influence on the pressure of the control surface movement to be more closely controlled.

In embodiments where the control surface is configured to disrupt eddies, it may also be referred to as an eddy disrupter.

In preferred embodiments, the at least one control surface is pivotably coupled to the at least one surface of the vehicle. In more preferred embodiments, the at least one actuator adjusts the position of the at least one pivotably coupled control surface from a first position in which the angle between the at least one control surface and the at least one surface of the vehicle is substantially 0 degrees, and a second position, in which an angle between the at least one control surface and the at least one surface of the vehicle is between about 2 degrees and about 90 degrees, in yet more preferred embodiments, between about 5 and about 40 degrees, and in most preferred embodiments, between about 10 and about 20 degrees. This may allow for the control surface to repeatedly interrupt the wake region of the vehicle. The second position being between 10 and 20 degrees may allow for the control surface to sufficiently interrupt the wake region without the control surface significantly increasing a width of the vehicle, or the flapping motion taking too long to complete for the subsequent periodic eddy to be disrupted.

As used herein, any ranges include the specified end points, i.e. an angle "between 2 degrees and 90 degrees" refers to any angle from, and including, 2 degrees to, and including, 90 degrees.

In particular, a front edge of the at least one control surface may be coupled hingedly or pivotably to one surface of the vehicle, such that, as the at least one control surface is pivoted, a rear edge of the at least one control surface is spaced apart from the one surface of the vehicle.

The at least one actuator preferably comprises at least one of: a motor; a linear solenoid; a rotary solenoid; a linear actuator; a rotary actuator.

In preferred embodiments, the processor is programmed to repeat for a plurality of generations, wherein each subsequent generation of parameters is based on an immediately preceding generation of parameters. As the optimisation algorithm is configured to optimise the parameters, repeating the programmed steps may allow the control surface to continuously improve the efficacy of interrupting the wake region to reduce drag on the vehicle.

In a more preferred embodiment, each subsequent generation is populated with a plurality of preferred vectors, wherein each of the plurality of preferred vectors is based on at least one control surface adjustment parameter of the immediately preceding generation of parameters. In yet more preferred embodiments, at least two vectors are generated based on, in turn, each control surface adjustment parameter of the immediately preceding generation of parameters.

Preferably, at least two vectors are generated based on, in turn, each one of the first generation of parameters. Alternatively, at least two vectors are generated based on, in turn, only a subset of the first generation of parameters.

At least one of the at least two vectors is, in preferred embodiments, for each parameter of the preceding generation, generated using at least one of: a crossover operation; a combination operation; and a mutation operation.

In preferred embodiments, each generation comprises at least 3 control surface adjustment parameters. In other terms, each generation of control surface adjustment parameters comprises at least 3 members. In more preferred embodiments, each generation comprises at least 6 members, and in yet more preferred embodiments, each generation comprises 10 members.

The threshold condition preferably is related to drag resulting from the vehicle moving through a fluid, in particular air.

The characteristic preferably comprises at least one of: a tone frequency and a phase. Advantageously, this may allow for the drag reduction system to anticipate the generation of periodic eddies, such as Strouhal eddies, so that the actuation of the control surface may be controlled according to these periodic eddies so as to disrupt the generation of these eddies.

These eddies in the wake region behind a vehicle moving through air result in lower pressure behind the vehicle compared to the pressure in front of the vehicle - which, as described above, results in increased drag. By anticipating and supressing periodic eddies, the pressure behind the vehicle may be maximised, thereby reducing the aerodynamic drag.

Each eddy disruptor adjustment parameter, in preferred embodiments, comprises at least one of: a delay between the threshold condition being satisfied and an adjustment of the position of the control surface; a frequency of an adjustment of the position of the control surface; a wave form of the motion of the flap; the threshold condition; an adjustment velocity of each adjustment; an adjustment acceleration of each adjustment; a number of adjustments. This may allow the control surface to be actuated according to, and so as to suppress or counteract, the expected generation of eddies.

Each adjustment parameter preferably comprises more than one adjustment characteristic. The term "adjustment characteristic" refers to a value, or design variable, such as a delay between the threshold condition being satisfied and an adjustment of the position of the control surface; a frequency of an adjustment of the position of the control surface; a wave form of the motion of the flap; the threshold condition; and an adjustment speed of each adjustment, which may be optimised by optimisation algorithm. Each adjustment parameter may more preferably comprise two, three, or four adjustment characteristics. Each vector comprises the same number of adjustment characteristics as the adjustment parameters, such that any crossover operation, combination operation and/or mutation operation may be carried out on each of the adjustment characteristics.

In a preferred embodiment, the position of the at least one control surface may be adjusted according to each of the at least two of the control surface adjustment parameters of the generation of control surface adjustment parameters, or each of the vectors, for a period of time. In a more preferred embodiment, the at least one control surface may be adjusted according to each of the vectors for at least 2 seconds and no more than 10 seconds, preferably for at least 4 seconds and no more than 8 seconds, yet more preferably for about 5 seconds.

Alternatively, the optimisation characteristic may be established more quickly, such that the time period is less than 1 second.

The period of time may be sufficiently long for the at least one control surface to be adjusted to its maximum deflection. Alternatively, the period of time may be long enough for the at least one control surface to be adjusted, according to each of the at least two of the control surface adjustment parameters of the generation of control surface adjustment parameters, or each vector, to its maximum deflection more than once. For example, the at least one control surface may be adjusted according to each vector between two and ten times. As these multiple adjustments occur in quick succession, the movement of the control surface may be referred to as "flapping".

As such, the control surface may be deflected once upon the threshold condition being met.

The control surface may then again be deflected upon the threshold condition still, or again, being met, so as to create oscillation or flapping.

Alternatively, the control surface may be deflected repeatedly, i.e. oscillated or flapped, upon the threshold condition being met, e.g. for the predetermined period of time.

The profile of the flapping may differ between successive adjustments/deflections of the or each control surface, i.e. each control surface adjustment parameter may comprise more than one velocity profile or acceleration profile, which may be applied in successive flaps, such that each deflection, or flap, may differ from a previous deflection, or flap.

The optimisation characteristic preferably comprises at least one of: a fuel economy measure and a pressure measure at, or near, a rear surface of the vehicle. The optimisation characteristic may comprise a combination of two or more of these parameters.

The pressure measure may be an average pressure, such as an average pressure over time.

In preferred embodiments, the drag reduction system comprises a plurality of pressure sensors, wherein each one of the plurality of pressure sensors is positioned so as to sense fluid pressure at, or near, a rear end surface of the vehicle. Advantageously, this may allow the characteristic to be a direct measure of the pressure at, or near, a rear end surface of the vehicle.

In particular, as maximising the pressure behind the vehicle minimises drag, a plurality of pressure sensors at, or near, the rear end surface of the vehicle may allow the drag reduction system to work with an internal optimisation characteristic, without any need to query e.g. a computer of the vehicle. As such, the internal optimisation characteristic may allow fuel efficiency to be optimised without having to measure fuel efficiency directly.

Alternatively or additionally, the drag reduction system comprises a plurality of pressure sensors, wherein at least one of the plurality of pressure sensors is positioned to sense fluid pressure at, or near, a side surface and/or a top surface of the vehicle. Advantageously, this may allow for a pressure at, or near, a side surface or a top surface of the vehicle to be compared to a pressure at, or near, an end surface of the vehicle, which may facilitate anticipation of periodic eddies.

Preferably, the processor is configured to receive data relating to vehicle operation, efficiency, or movement from the vehicle. This may be a measure of fuel efficiency (e.g. miles per gallons, or litres per 100 kilometres), and this data may be used to compare the different control surface adjustment parameters and to determine the better ones of the adjustment parameters.

Additionally or alternatively, the data relating to vehicle operation, efficiency, or movement may be a measure of vehicle velocity, which influence a preferred frequency of an adjustment of the position of the control surface, or a vehicle acceleration.

It is to be noted that the term "panel" is used to describe the control surface that disrupts the flow patterns, the swirl patterns, or the vortices. The term panel, unless the terms "flat panel" or "curved panel" are used to more specifically define the control surface, is generic to any control surface that physically extends above the vehicle surface(s) to alter the fluid movement patterns over that surface, and could include moveable tubular control surfaces, non-geometric designs, fingers, posts, and the like.

Preferably, the at least one control surface is positioned as close to an area of wake formation as possible.

It is also to be noted that even though various positions of the panels on the surfaces of the vehicles have been identified, the positioning of the panels anywhere on the vehicle where drag is created in the fluid stream may be useful, at the very front of the vehicle to the most rearward positions on the vehicle.

As the system comprises "at least one control surface", it should be appreciated that the system may comprise 2, 3, 4, or more, control surfaces. These control surfaces may all be positioned on the same side surface, or top surface, of the vehicle, or the system may comprise, e.g., one control surface per side surface of the vehicle and two disrupters on the top surface of the vehicle. Using more than one control surface may improve the overall drag reduction the system may achieve.

The drag reduction system may provide an adaptive, closed loop system which integrates computer controls with motivated (that is, controlled and moveable) eddy disrupting control surfaces mounted on the body of the vehicle. These control surfaces may be pneumatic, hinged, motor-driven, vertical or horizontal flaps, posts, screens, appendages or other geometric or non-geometric shapes that may be capable of reducing wake size and/or maximizing the pressure at the rear of the vehicle (e.g. a truck trailer) by protruding movement, such as pivotal movement outward from the plane formed by the surface of the vehicle. The control surface may be rapidly and repeatedly deployed at a variety of magnitudes. The control system may be fed physical measurement data including vehicle speed and the pressure at one or more locations on the vehicle, including at least a pressure adjacent to the rear or directly behind the vehicle, and through any existing computerized control systems. The system comprises an optimisation algorithm, which may allow the parameters according to which the control surface is deflected to be optimised and for the drag reduction system to reduce drag independently of road conditions.

Any features described in relation to the first plurality of control surface adjustment parameters, or generation, and the second plurality of control surface adjustment parameters, or generation, may equally, where not mutually exclusive, be applied to the preceding plurality of control surface adjustment parameters, or generation, and the subsequent plurality of control surface adjustment parameters, or generation. That is, they may apply to each, or only some, of the preceding and subsequent plurality of control surface adjustment parameters.

In a second aspect, the present invention provides a drag reduction method for a vehicle comprising the steps of: randomly generating a first generation of control surface adjustment parameters, wherein each one of the control surface adjustment parameters is generated within a pre-defined range; receiving sensor data from at least one pressure sensor; and comparing a characteristic of the sensor data to a threshold condition.

The method, upon the threshold condition being satisfied, further comprises the steps of operating at least one actuator so to adjust a position of at least one control surface relative to at least one surface of the vehicle based on at least two of the control surface adjustment parameters of the first generation; comparing an optimisation characteristic of each of the at least two control surface adjustment parameters based on the first generation to determine at least one preferred adjustment parameters; and populating a second generation of control surface adjustment parameters based on the at least one preferred adjustment parameter.

The method, upon the threshold condition not being satisfied, further comprises the steps of receiving new sensor data from the at least one pressure sensor and compare a characteristic of the new sensor data with the threshold condition.

Preferably, the method repeats for a plurality of generations, wherein each subsequent generation of parameters is based on an immediately preceding generation of parameters. As the optimisation algorithm is configured to optimise the parameters, repeating the programmed steps may allow the optimisation algorithm to continuously improve the efficacy of interrupting the wake region to reduce drag on the vehicle.

In a third aspect, the present invention provides a vehicle comprising: a vehicle body comprising a front end surface and an opposite rear end surface, a top surface, and first and second side surfaces extending between the front end surface and the opposite rear end surface; and a drag reduction system for a vehicle.

The drag reduction system comprises: at least one control surface movable relative to at least one surface of the vehicle; at least one actuator for adjusting a position of the at least one control surface relative to the at least one surface of the vehicle; at least one pressure sensor positioned so as to sense fluid pressure at, or near, a rear end surface of the vehicle; and a processor comprising an optimisation algorithm.

The processor comprising the optimisation algorithm is programmed to randomly generate a first generation of control surface adjustment parameters, wherein each one of the control surface adjustment parameters is generated within a pre-defined range; receive sensor data from the at least one pressure sensor; and compare a characteristic of the sensor data to a threshold condition.

The processor comprising the optimisation algorithm is programmed to further, upon the threshold condition being satisfied, operate the at least one actuator so to adjust a position of the at least one control surface relative to the at least one surface of the vehicle based on at least two of the control surface adjustment parameters of the first generation; compare an optimisation characteristic of each of the at least two control surface adjustment parameters of the first generation to determine at least one preferred adjustment parameter; and populate a second generation of control surface adjustment parameters based on the at least one preferred adjustment parameters. Upon the threshold condition not being satisfied, the processor comprising the optimisation algorithm is programmed to receive new sensor data from the at least one pressure sensor and compare a characteristic of the new sensor data with the threshold condition.

In a fourth aspect, the present invention provides a vehicle comprising a drag reduction system according to the first aspect.

Any, some and/or all features in one aspect of the present invention may be applied to any, some and/or all other features of the same aspect of the invention, in any appropriate combination.

Any feature in one aspect of the invention may be applied to other aspects of the invention, in any appropriate combination. In particular, method aspects may be applied to apparatus aspects, and vice versa. Furthermore, any, some and/or all features in one aspect may be applied to any, some and/or all features in any other aspect, in any appropriate combination.

It should also be appreciated that particular combinations of the various features described and defined in any aspects of the invention may be implemented and/or supplied and/or used independently.

BRIEF DESCRIPTION OF THE FIGURES

One or more preferred or example embodiments of the present invention will now be further described with reference to the accompanying drawings, in which:

Figure 1 is a schematic diagram illustrating a drag reduction system embodying the present invention;

Figure 2 is a perspective view of a vehicle employing a system and method embodying the present invention;

Figure 3 is perspective view of another vehicle employing a system and method embodying the invention;

Figure 4 is a perspective view of a vehicle employing a system and method embodying the invention, in which an angle between the control surface and a surface of the vehicle is substantially 0 degrees;

Figure 5 is a perspective view of a vehicle employing a system and method embodying the invention as shown in Figure 4, in which an angle between the control surface and a surface of the vehicle is between about 2 degrees and about 90 degrees;

Figure 6 is a perspective view of some example shapes of control surfaces which may be used in a system and method embodying the invention;

Figure 7A is a flow diagram illustrating a method embodying the present invention which may be used in conjunction with a system as shown in Figure 1 or a vehicle as shown in Figures 2 to 6;

Figures 7B, 7C, and 7D are partial flow diagrams which, together with the flow diagram of Figure 7A illustrate the method embodying the present invention;

Figure 8 is a graph showing the convergence of flap frequency over 20 generations for different trial runs; and

Figure 9 is a graph showing the convergence of trigger delay over 20 generations for different trial runs.

DETAILED DESCRIPTION OF PREFERRED OR EXAMPLE EMBODIMENTS

The system and method disclosed herein may be generally described as including a vehicle that has reduced drag when it moves through air. The vehicle body has front, rear, side, top and bottom surfaces. At least the rear surface of the vehicle body causes drag as the vehicle moves through a fluid. There is at least one sensor on the vehicle body that senses conditions, such as pressure changes, having a physical relationship with drag on at least the rear surface of the vehicle body as the vehicle moves through the fluid. There is a processor receiving signals from the sensors relating to sensed pressure changes. There is at least one control surface on at least one surface of the vehicle body forward of the rear surface of the vehicle that is capable of being moved in relation to the at least one surface in response to signals from the processor. A program is executable by the processor that sends signals to the at least one control surface while the vehicle is moving causing the at least one control surface to move in a manner that will at least partially and physically disrupt at least some eddies on the at least one surface before the eddies reach the rear surface of the vehicle body.

The processor comprises a differential genetic optimisation algorithm configured to optimise the parameters according to which the at least one control surface is being moved. The disruption of the eddies by the at least one control surface reduces overall drag on the vehicle as the vehicle moves through the fluid. The vehicle is an on-road vehicle (such as car, motorcycle, truck, trailer, semi-trailer, van and the like).

An example truck with which the drag reduction system may be used may have a body that is at least about 6 meters long, at least about 8 meters long, at least about 10 meters long or longer (e.g., double-bodied or tandem bodies). The control surfaces mounted thereon may comprise at least one moveable control surface (preferably a panel) moveable relative to at least one surface of the vehicle body to disrupt eddies in advance of the rear surface. The at least one control surface may be present on at least one surface selected from the group consisting of a top surface of the vehicle and the side surfaces of the vehicle. Where the control surface is a panel and moves relative to the at least one surface, a motor that moves the at least one panel may respond to signals from the processor to move along a hinge at least about 10 degrees of movement in less than one second, less than about 0.1 seconds and even less than about 0.001 seconds (e.g., about 1 to about 100 milliseconds).

The at least one sensor senses pressure on a rear surface of the vehicle. The at least one surface to which the at least one panel is coupled has a length, and the at least one panel is located at least 25% of said length away from said rear surface, or at least 50% of said length, and even 100% of the length (e.g., on the front of the trailer top surface, or even on the cab surface in advance of the trailer). The control surfaces may also be on the sides of the trailer (or cab) and underneath the trailer (or cab).

The processor is connected to motivating control surfaces associated with the panels, and the response times for the panels and motivating control surfaces should be rapid. Because the system is dealing with real time events, response times between the sensor, the processor and the motivator may be less than about 5 seconds, less than about 2 seconds, less than about 1 second, and possibly measured in the millisecond (e.g., less than about 0.01 second response times) or even microsecond ranges (less than about 0.001 second response time).

For example, as signals representing pressure changes are sent to the processor, the program in the processor should actually cause a change in the panel positions in less than the time frame identified. As the pressure changes occur on a continuous time frame basis, and change frequently, the faster the response time, the greater the impact of the system. In particular, a system in which the optimisation characteristic is a pressure adjacent the rear end surface of a vehicle (i.e. the pressure behind a vehicle, measured by a plurality of sensors, is to be maximised) may allow for the fastest response times, as no information is required from an on-board diagnostics (OBD) port of the vehicle.

The drag reduction method embodying the present invention in a second aspect is a method of breaking up eddies on the vehicle body surface in real time, rather than providing a fixed design or position of an control surface attempting to reduce drag produced by relative air movement on a vehicle. This method and apparatus physically breaks up eddies by movement of a geometric form relative to a surface of the vehicle to disrupt or prevent adverse eddy formation and translation on the surface. The eddy disruption modifies air pressure behind a rear of the vehicle such that the rear air pressure is closer to a frontal air pressure on a front of the body during relative air movement. A system embodying the invention does not have to include inletting an amount of air from a boundary flow around the body and forming a pressure shell behind the rear of the body. However, systems and methods embodying the invention may be combined with other drag reduction techniques to add further advantages.

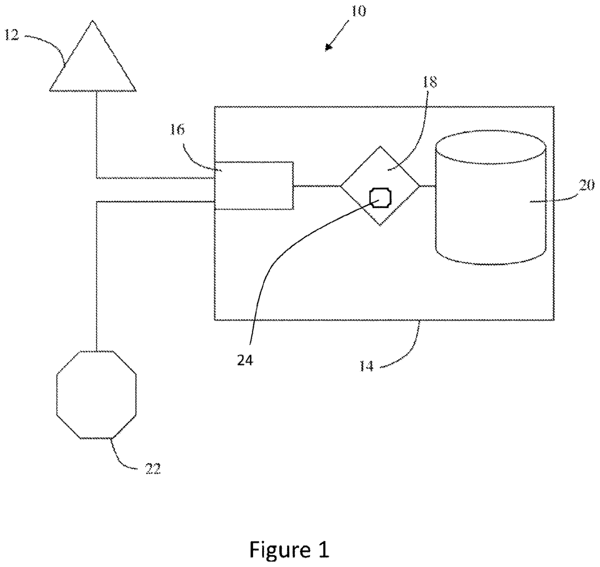

With reference to Figure 1, a drag reduction system 10 for a vehicle is provided. The drag reduction system 10 is configured to reduce drag experienced by a vehicle moving through air.

System 10 includes a pressure sensor 12 positioned so as to measure an air pressure at, or near, a rear end surface of a vehicle (not shown), such as an automobile, truck, plane, or train. Sensor 12 is coupled to the vehicle, and configured to facilitate detection of an air pressure characteristic through measured data, such as air pressure and changes thereto, in connection with a portion of the air generally adjacent to the rear end surface of the vehicle, particularly while the body is in motion through the fluid. Sensor 12 communicates measured data, either wired or wirelessly, to a control system 14. Measured data from sensor 12 is received via data input/output port 16.

The control system 14 further includes a processor 18 and memory 20 in communication with data port 16 and one another for purposes of analysing the measured data and comparing the measured data with stored historic data, relationships and/or programs in memory 20. The measured data is processed by processor 18 running programs in memory 20. In particular, the measured data may be analysed by control system 14 to detect certain conditions which may be related to the drag or opposing resistive forces resulting from movement of the body through the fluid.

In particular, the processor 18 and memory 20 analyse the measured data to determine both a tone frequency and a phase of the pressure changes. In particular, frequency analysis of the measured pressure data may be performed in a specified range of frequencies which is associated with a periodic eddy, such as a Strouhal eddy. This may enable the generation of periodic eddies to be anticipate and suppressed.

System 10 is in further communication with an control surface 22 which is configured to disrupt or otherwise cause a change in conditions of at least a portion of the fluid adjacent to the moving body. In particular, the control surface 22 is configured to suppress generation of periodic Strouhal eddies.

Control surface 22 may include a mechanical device operatively associated with an appendage capable of alternately projecting and retracting from the surface of the vehicle to cause a change in the fluid conditions adjacent to that surface of the vehicle.

In a preferred embodiment, control surface 22 is configured to be adjusted between a position in which control surface 22 is substantially parallel to the surface of the vehicle, i.e. a position in which an angle between the control surface 22 and the surface of the vehicle is substantially 0 degrees, and a position in which a rear portion of the control surface 22 is spaced apart from the surface of the vehicle, i.e. a position in which an angle between the control surface 22 and the surface of the vehicle is larger than 0 degrees, e.g. between 10 and 20 degrees.

Independently of which type of control surface 22 is used, movement of control surface 22 may be actuated and controlled by processor 18 processing instructions, programs, or parameters in memory 20 through wired or wireless communication with data port 16.

In particular, processor 18 comprises a differential genetic optimisation algorithm 24, which is configured to optimise the instructions, programs, or parameters according to which movement of control surface 22 is controlled such that the control surface suppresses generation of periodic eddies, such as Strouhal eddies, to reduce drag as the vehicle moves through air. The differential genetic optimisation algorithm 24 generates new parameters according to which movement of control surface 22 is controlled based on parameters which have previously been found to be preferable, i.e. because movement according to the preferred parameters resulted in reduced drag.

The operation of the differential genetic optimisation algorithm 24 is described in more detail below.

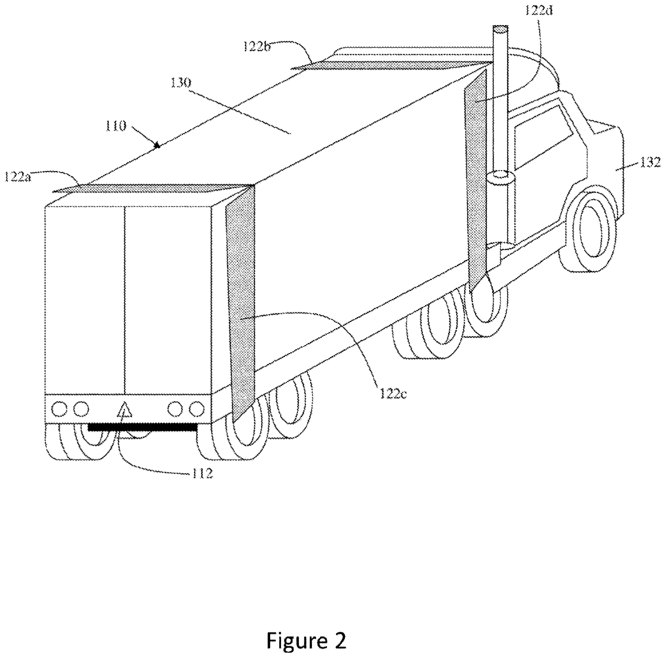

Figure 2 shows a perspective view of a vehicle employing a system and method embodying the present invention, which includes a truck 110 consisting of a trailer portion 130 and cab portion 132. Control surfaces 122 and a sensor 112 are mounted on trailer portion 130. Sensor 112 measures conditions relating to air pressure adjacent to the rear surface of truck 110.

As shown in Figure 2, four control surfaces are mounted on truck 110; two control surfaces 122a,122b are mounted on the top surface of trailer 130 and two control surfaces 122c,122d are mounted on a side surface of trailer 130, substantially perpendicular to the top mounted control surfaces 122a, 122b. Control surfaces 122a, 122c are both adjacent to the rear portion of trailer 130, whereas control surfaces 122b,122d are both adjacent to the front portion of trailer 130. Control surfaces 122 are generally elongate, rectangular panels mounted on trailer 130 along a front-facing (with respect to the orientation of truck 110) longitudinal edge of the control surfaces 122 for pivotal motion with respect to the surface of trailer 130.

It should be understood that control surfaces 122 may be mounted and employed differently and in other locations along the moving body, and that any moving body, such as a car, train or plane for example, may be provided with control surfaces 122. It should also be understood that only one control surface 122 may be employed, and that an control surface 122 may be provided in any location, such as on the outer surface of the air dam on top of cab 132, or elsewhere, and may be of any suitable length. The, or each, control surface 122 may also be divided into multiple, separately actuated panels that function similarly to individual moving flaps, which may facilitate a reduction of power required to operate the panel and an increase in response time or mobility.

A control system (not shown), which may be similar to control system 14, is installed in any suitable location on truck 110, such as within the dashboard electronics in cab 132. Measured data from sensor 112 is processed and compared with a threshold condition. Control surfaces 122a,122b,122c,122d are individually responsive to the control system. Upon satisfaction of the threshold condition, one or more control surfaces 122 are actuated for movement according to control surface adjustment parameters. The control surfaces 122 may pivot along a front side edge such that the opposing side projects from the surface of trailer 130 and forms an angle relative thereto when viewed along a cross-sectional profile. The angle formed may be about 0 degrees to about 90 degrees. When the threshold condition is not satisfied, control surfaces 122 may be substantially flush or planar with respect to the outer surface of trailer 130, i.e. the angle between the control surfaces 122 and the surface of the trailer 130 is substantially 0 degrees.

The control surfaces 122 may be positioned substantially in the plane of the vehicle surface so that they create no elevation over the surface of the vehicle (e.g., be embedded in the surface so that they do not protrude from the vehicle surface and create drag or disruption when not in an extended state). The control surfaces 122 may also be retrofit onto vehicles where they are not embedded. In this case, the control surfaces 122 are likely to slightly protrude over the surface of the vehicle to which they are coupled. This may impact flow over the vehicle surface, but that effect is minimal compared to the benefits of overall drag reduction, in particular because the control surfaces 122 are within the boundary layer of the flow.

In both initial construction of the system into vehicles or in retrofitting, the electronics (e.g., motor, wire, FPGA, ASIC, processor, etc.) should be protected to some degree or as much as possible from the control surfaces, and be located within the vehicle, within recesses or within housing specifically for the electronics. Due to potential damage from shifting loads and the like, any wiring within the vehicle should be provided with protection against abrasion and other damaging contact, and may even use metal casing to protect wires.

It should be understood that the threshold condition may be developed pursuant to any relationship or formula that is generally indicative of a drag condition which may be positively impacted through the operation of a system embodying the invention, such as system 10. The threshold condition may also be connected with indicator of operative efficiency against the resistance caused by drag, such as distance travelled per unit fuel used rate, such as knots or miles per gallon or electrical load required. Thus, the threshold may be satisfied if conditions detected determine a particular drop in a rate of travel due to drag.

Furthermore, system 10 may further include a user interface which is in wired or wireless communication with control 14 for facilitating user settings of threshold conditions. For example, a user operating a vehicle with a system 10 installed therein may access the user interface to set threshold conditions such that the threshold is satisfied by a specified loss in miles per gallon or efficiency due to drag on the vehicle.

The threshold condition is a preset value based on empirical, experimental, or other data. In other embodiments, the threshold condition relates to a difference either between a prior taken measurement by sensor 12 or over time by sensor 12. In yet other embodiments, the threshold condition relates to a difference between more than one sensor mounted on the moving body, such as a sensor mounted at the rear surface of the moving body and a sensor mounted along a side or front surface.

In preferred embodiments, a pressure characteristic is determined from the measured data using frequency analysis. In particular, the frequency analysis is performed within a specified frequency band to locate the primary tone frequency. The pressure characteristic, which is related to the magnitude and/or phase angle of the Strouhal frequency, is then compared to the threshold condition.

In operation, truck 110 is driven along a road or highway while sensor 112 is continually sensing conditions, such as fluid pressure, and relaying the sensed conditions to the internal control system for processing and comparison with threshold conditions. It should be readily apparent that the driver may at least in part control the establishment of threshold conditions through a user interface in cab 132 , as discussed above. One or more of the control surfaces 122 may be continually actuated as conditions relating to drag are compared with threshold conditions while truck 110 is driven.

Additionally, the differential genetic optimisation algorithm 24 continually generates new parameters according to which the one or more control surfaces 122 are actuated, thereby improving the performance of the drag reduction system in any conditions.

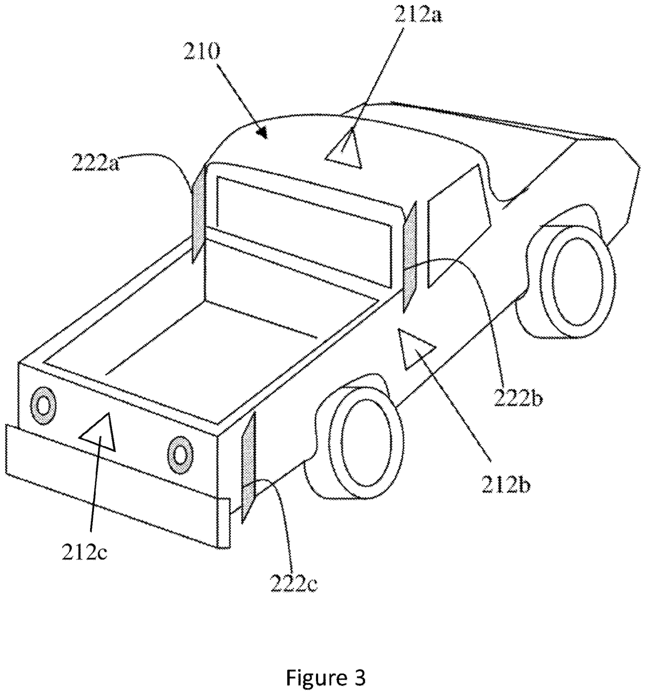

Figure 3 is perspective view of another vehicle employing a system and method embodying the invention, installed in a pickup truck 210. Pickup 210 includes sensors 212a,212b,212c, wherein sensor 212a is mounted on the roof of passenger compartment 234 of truck 210 while sensor 212b is mounted on a side surface of truck 210 and sensor 212c is mounted on a rear end surface of truck 210.

Control surfaces 222a,222b are installed on opposing sides of truck 210 adjacent to passenger compartment 234 while control surface 222c is installed on a side of truck 210 adjacent to the rear bumper. Control surfaces 222a,222b,222c are rectangular panels which are mounted on a front side edge thereof for pivotal motion relative to the surface of truck 210.

Control surfaces 222a,222b are planar with truck 210 but project rearward from passenger compartment 234 when not actuated thus effectively extending the side surface when not actuated. One or more of control surfaces 222 are responsive to a threshold condition being satisfied by pivoting outwardly so that the rear side edge projects from the plane of the surface of truck 210 , similar to the manner in which control surfaces 122 operate.

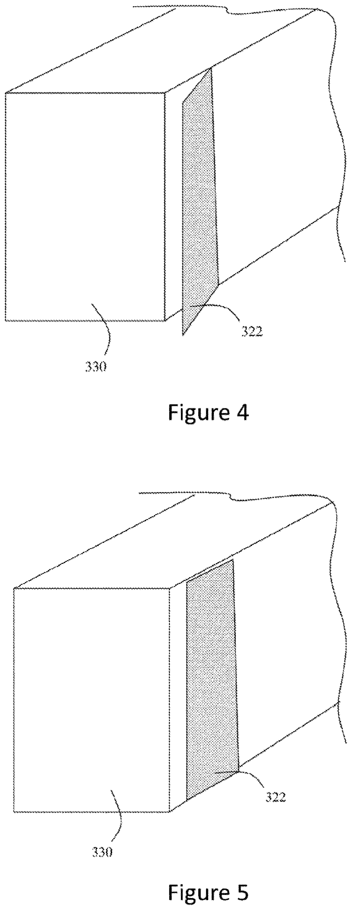

Figures 4 and 5 illustrate the actuated and non-actuated positions along with the pivoting motion of control surface 322 which is mounted on a trailer 330 and operates in similar fashion to control surface 122c on trailer 132. As shown in Fig. 4, control surface 322 is in a non-actuated position, substantially planar with the outer surface of trailer 330, i.e. a position in which an angle between the control surface 322 and the surface of the trailer is substantially 0 degrees. Fig. 5 depicts the actuated position responsive to satisfaction of a threshold condition in which control surface 322 pivots about a front side edge so that the rear edge thereof projects outwardly into the air forming an angle with respect to the side surface of trailer 330, i.e. a position in which an angle between the control surface 322 and the surface of the trailer is larger than 0 degrees, e.g. between 10 and 20 degrees.

A small lip may be provided on the control surface 122, 322 to direct flow away from the sides (or the top) of the vehicle.

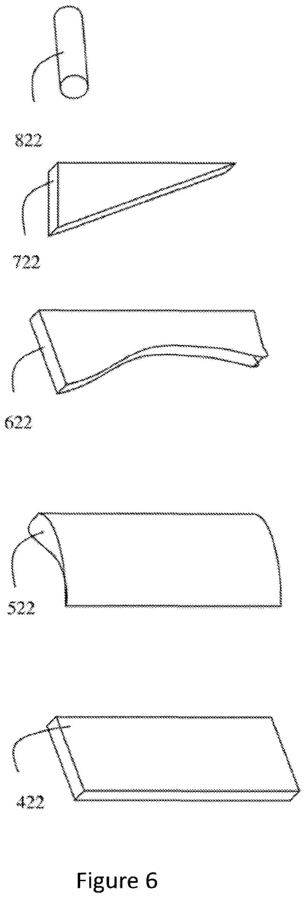

Figure 6 illustrates, among other things, examples of shapes and sizes of control surfaces which may be employed in systems embodying the invention. It should be readily apparent that the size, shape, amount and position of the control surfaces may vary and may depend on the size and type of vehicle to which the control surface is employed. Furthermore, an control surface may be mounted on any side. The examples shown include control surface 422 which is substantially rectangular. Control surface 522 has a substantially arcuate and scalloped cross sectional profile with varying thickness. Control surface 622 has a varying latitudinal shape and thickness. Control surface 722 is substantially triangular in shape and control surface 822 is cylindrical.

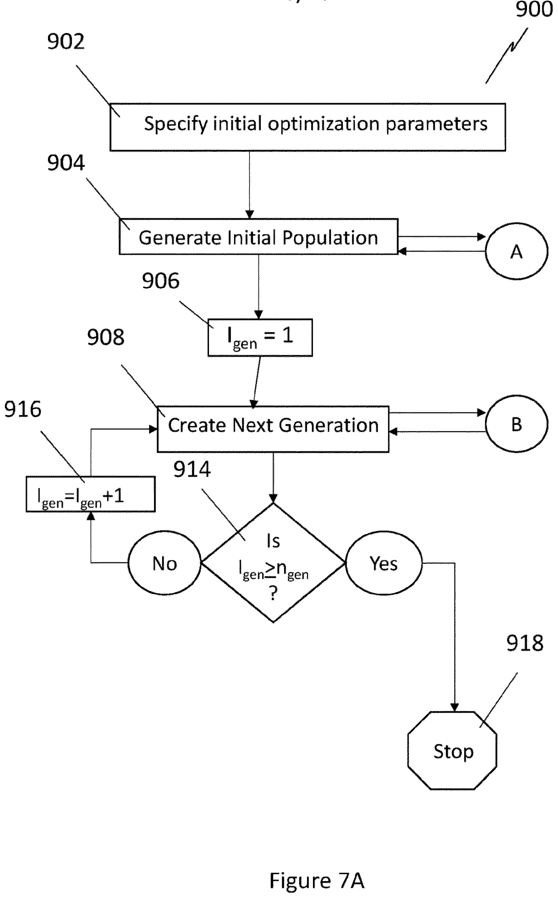

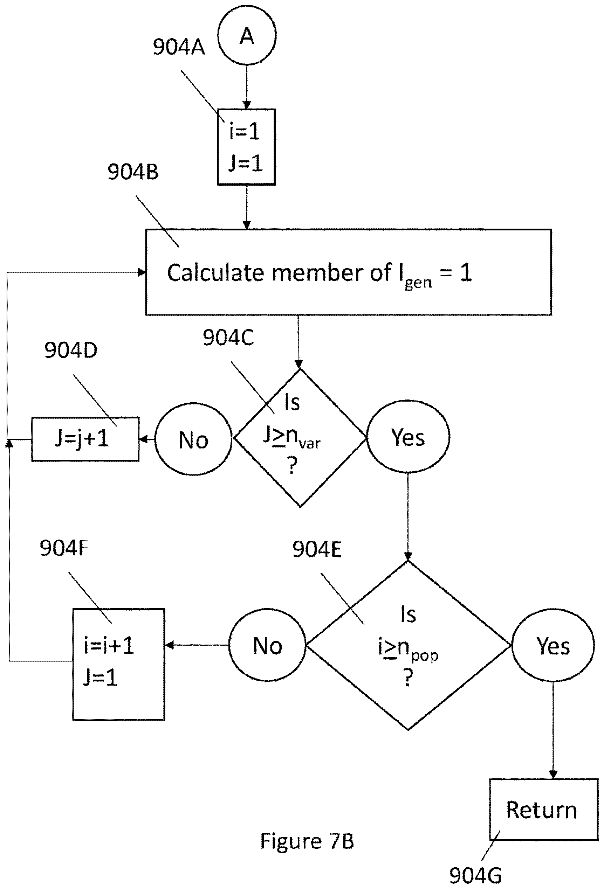

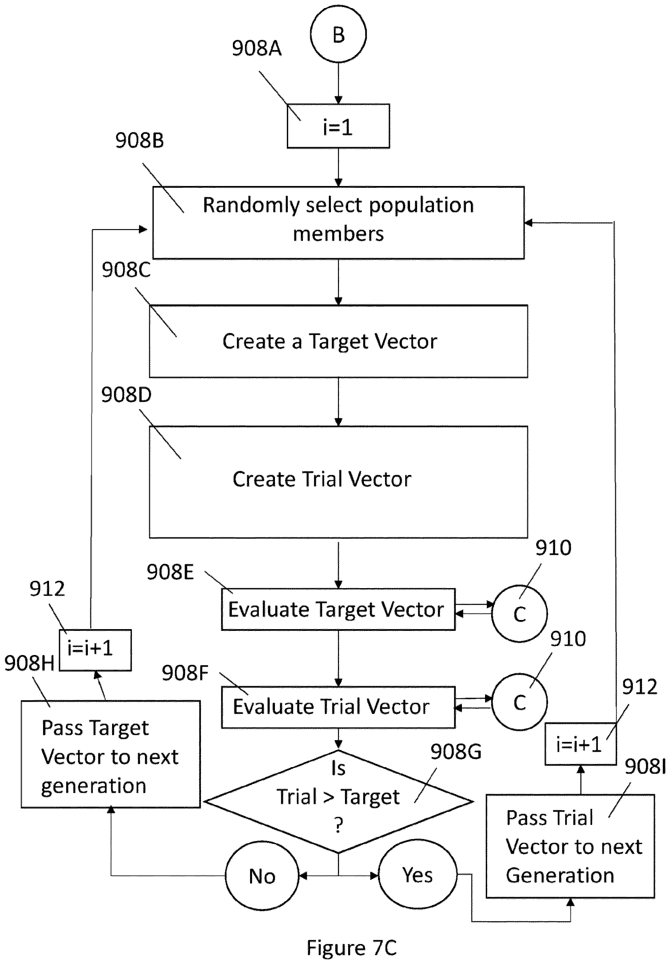

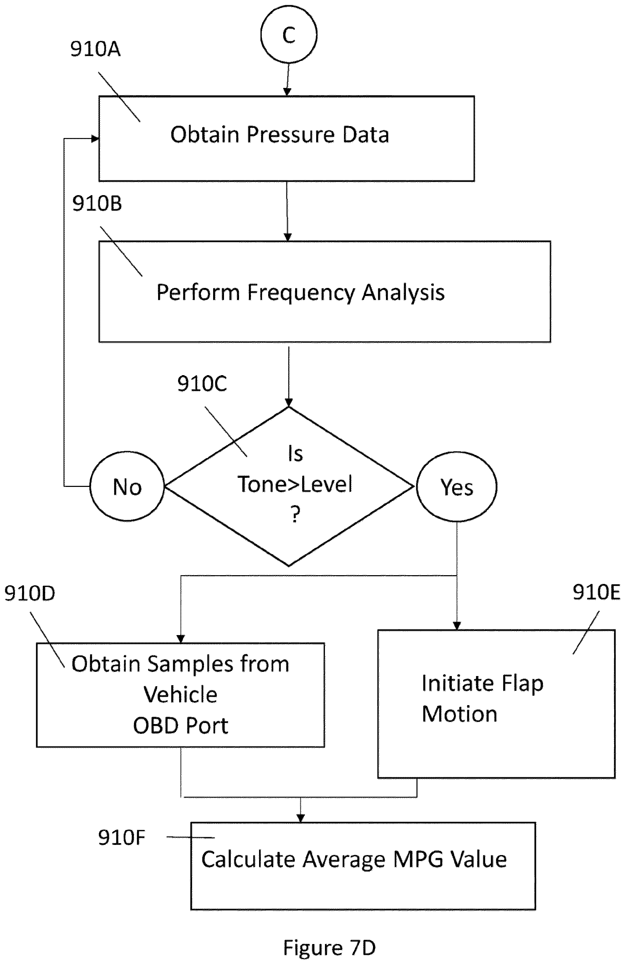

A method 900 embodying the present invention in the second aspect is shown in Figures 7A, 7B, 7C, and 7D, which may be employed in system 10 or any of the vehicles described above and shown in Figures 2 to 5. Method 900 may be used to control any of the example control surfaces shown in Figure 6.

In a first step 902, optimisation parameters are specified. These optimisation parameters may include at least one of:

- a number of generations to execute $n_{gen}$, before the optimisation method 900 is terminated;
- a number of population members $n_{pop}$, i.e. the number of members in each of the generations $n_{gen}$;
- variable bounds $X_{max}$ and $X_{min}$, i.e. upper and lower bounds for each design variable; and
- parameters and operations for creating new population members based on members of the previous generation.

Other optimisation parameters may be specified.

The variable bounds for the flap frequency, i.e. the frequency of an adjustment of the position of the control surface, may be 0.75 to 2.5 cycles per second (i.e. 0.4 to 1.3 Hz). The variable bounds for the trigger delay, i.e. the delay between a pressure characteristic satisfying the threshold condition and the control surface being actuated, may be 100 to 800 milliseconds.

These parameters may be pre-specified and saved on memory, e.g. memory 20. They may be set by the user upon initialisation. They may be dependent on the type, size, weight, and performance characteristics of the vehicle in which method 902 is employed.

An initial population 904 is generated. This step may be carried out before the system is initiated, i.e. the initial population may already be generated and stored in memory 20. Alternatively, this step may be carried out during initialisation. The process by which the initial generation is generated is specified in A, which is detailed in Figure 7B.

At the beginning of the process of generating the initial population, the first design variable (J = 1) of the first member (J=1) of the initial generation ($I_{gen}$ = 1) 904A is selected. The first design variable of the first member 904B is calculated.

Any suitable algorithm or method for randomly generating the first design variable may be used. For example, method 900 implements an algorithm to determine the design variable(s) according to equation (1):

$$(1) \quad X(i,j)=X_{min}(j)+rnd*\{X_{max}(j)-X_{min}(j)\}$$

$X_{max}$ and $X_{min}$ represent the upper and lower bounds of the design variable(s), and rnd is a random number from 0 to 1.

The variable bounds apply to the design variables of the members of the randomly generate first generation, or initial population. They may also apply to subsequent generations. However, as the variable bounds may be relatively narrow bands (i.e. relatively narrowly distributed around a promising value), design variables of members of subsequent generations may not be limited to being within the bounds.

The design variables are flap frequency, a delay between receiving a trigger signal which satisfies the threshold condition and actuation of the control surface, and a trigger level, i.e. the threshold condition. Other design variables may be used. These may include one or more of: a waveform of the motion of the control surface; a rotational speed of the adjustment of the control surface; a magnitude of the flapping motion; an overall time for which the control surface is flapped; uniformity of the deflection. For example, the control surface may be deflected according to a square, triangular, and sine wave.

The movement of control surface 22 may be periodic or non-periodic, and may differ in one or more ways in successive actuations. Such differences between such triggered "disruption events" caused by the movement of control surface 22 may be programmed, randomly generated, or optimised by method 900. For example, the movement of control surface 22 may be based on further information regarding the real-time rate of eddy shedding or to match or otherwise be responsive to eddy shedding. The timing for movement of the disrupter 22 may be measured in the range of seconds or even milliseconds or less.

After calculation 904B of each design variable it is determined 904C if all design variable have been calculated, i.e. if "$J \geq n_{var}$". In other words, if the total number of design variables ($n_{var}$) is larger than the number of design variables already calculated, the counter J for design variables is increased by one in step 904D and the next design variable of the member is calculated 904B.

Once all design variables for member i have been calculated, in the next step it is determined 904E if all required members of the initial population have been calculated, i.e. if the last calculated member i is the final member required, i.e. if "I $\geq n_{pop}$". If all of the members have not yet been calculated, the counter i for the current member is increased by one in step 904F and the design variables of that member are calculated as described above.

Once all the members have been calculated, i.e. once "I = $n_{pop}$", the first generation is complete and the operation returns 904G to method 900.

Using 906 the initial generation ($I_{gen}$ = 1), the next/second generation is created 908. The process by which the initial generation is generated is specified in B, which is detailed in Figure 7C.

To create 908 the second generation, the first member of the first generation (i = 1) is selected 908A. A small number of the other members of the first generation (i ≠ 1) is randomly selected 908B. In the preferred embodiment of the method 900, this small number is three members of the first generation. However, the number may be any number of members.

A target vector is created 908C by combining traits of the population members selected in step 908B. This may be a simple averaging of the traits, i.e. the design variables, of each of the selected members, or may be a more elaborate algorithm which the person skilled in the art would be familiar with.

A trial vector is created 908D by a crossover operation between the target vector created in step 908C and the current population member (e.g. i = 1). The target vector is evaluated 908E and the trial vector is evaluated 908F.

While the creation of the target vector using a crossover operation is described, any other operation suitable for creating new trial vectors known to the skilled person may be used, such as combination operations and mutation operations.

The evaluation of both vectors 908E, 908F is specified in C, which is detailed in Figure 7D.

To evaluate the vectors, pressure data is obtained 910A from a pressure sensor 12, 112, 212a, 212b, 212c. Frequency analysis is carried out 910B on the pressure data obtained in step 910A.

This frequency analysis is carried out within a specified frequency band to locate the primary tone frequency which is related to the magnitude and/or phase angle of the Strouhal frequency.

The magnitude of the primary tone frequency is then compared 910C to the threshold level to determine if the threshold condition is satisfied. If the magnitude is not larger than the threshold level, the operation is returned to step 910A and new pressure data is obtained and analysed 910B. As such, method 900 continues to receive measured pressure data but no action is taken.

If the magnitude of the primary tone frequency is larger than the threshold level, samples are obtained 910D from a vehicle's OBD port and the flap motion is initiated 910E according to the design variables according to the target vector or trial vector.

The average miles per gallon (MPG) or litre per 100 kilometres (L/100km) value is calculated 910F as optimisation characteristic for the duration of the flap motion. Instead of obtaining 910D samples from the vehicle's OBD port and calculating average MPG values 910F, another (or additional) optimising characteristic may be used. For example, if multiple pressure sensors on the rear end of a vehicle are used, the optimisation characteristic may be maximising a pressure adjacent the rear end of a vehicle.

Once the average MPG or L/100km (or other optimisation characteristic) has been determined for both the trial vector and the target vector, it is determined 908G if the optimisation characteristic is better for the trial vector or the target vector.

If the optimisation characteristic is better for the target vector, the target vector is passed 908H to the next generation and the counter i for the current member is increased by one in step 912. Alternatively, if the optimisation characteristic is better for the trial vector, the trial vector is passed 908I to the next generation and the counter i for the current member is increased by one in step 912.

This creation of new trial vectors and target vectors is continued until each member of the first generation has been replaced either with the target vector or the trial vector to create the second generation. Once the second generation has been created, it is determined 914 if all required generations $n_{gen}$ have been created, i.e. if the last created generation $I_{gen}$ is the final generation required, i.e. if "$I_{gen} \geq n_{gen}$".

Steps 908E and 908F occur in immediate succession, such that changes in (road) conditions are minimised because the optimisation characteristics of the trial and target vectors are compared in quick succession. In other words, because the evaluation of corresponding vectors is separated by seconds, road conditions such as the inclination of the road changes only minimally between measurements which are compared. As such, the optimisation process of method 900 is not overwhelmed by the changes in conditions.

If not all the required generations have been created, the counter $I_{gen}$ for the current generation is increased by one in step 916. The next generation is created in step 908 according to process B as described above in relation to creating the second generation based on the first generation.

If all the required generation have been created, i.e. if "$I_{gen} = n_{gen}$", method 900 is terminated 918.

After method 900 is terminated, the control surface may be continually operated according to members of the final generation. Alternatively, an optimal one of the members of the final generation may be determined.

Method 900 of may also be restarted by the user, or automatically, as required.

In a preferred embodiment of method 900, which may be employed in the system 10 and any of the vehicles of Figures 2 to 5, the number of generations $n_{gen}$ is 20, the number of members $n_{pop}$ in each generation is 10, the number of data points collected from a sensor in step 910A is 1000, and data points are obtained from the vehicle's OBD port in step 910D every 140 milliseconds.

Each of the target vector and the trial vector may be evaluated for about 7 seconds. After an initial delay between the threshold condition being satisfied and the control surface being adjusted, the control surface may be repeatedly deflected, or oscillated, or flapped, according to each of the vectors for about 4 or about 5 seconds. The evaluation requires about 7 seconds because typical OBD ports may only be queried at relatively long intervals (e.g. 140 milliseconds), which allows for 25 to 50 MPG readings (or L/100km readings) to be taken.

The quicker the evaluation of the vectors may be conducted, the faster the system and method of embodiments of the present invention may counteract the generation of eddies. As such, a preferred embodiment having a plurality of pressure sensors positioned to measure air pressure at, or near, a rear end surface of the vehicle may allow for the vectors to be evaluated more directly and quickly.

Alternatively, fewer than 25 to 50 MPG readings (or L/100km readings) may be taken to speed up the optimisation process of the system. However, data fragments in the MPG readings (or L/100km readings) may become more challenging to deal with if fewer MPG readings (or L/100km readings) are available.

In particular, the optimisation characteristic should be available instantaneously such that the system is a "true" real time optimisation. This is achievable if an air pressure measure at, or near, a rear end surface of the vehicle is used, but may be difficult to achieve if the optimisation characteristic, such as a MPG measure (or a L/100km measure), needs to be acquired from a vehicle's OBD port.

If an air pressure measure is used, that pressure measure may be an average pressure over a period of time. As the flow is turbulent, a single pressure value may not be sufficient to accurately reflect the drag created by the vehicle moving through air.

Although a preferred implementation of a drag reduction method has been described, there are many ways to implement a differential optimisation algorithm and the skilled person may conceive of other implementations.

Initial testing of systems and methods embodying the invention has demonstrated significant efficiency gains which, if scalable to a full size class 8 tractor trailer, would represent a transformational technology for road-going vehicles. While fixed position drag reduction designs may reduce drag by up to 10%, for example, the present technology has capabilities of reducing drag by 30% or more. High speed video images may help to demonstrate the impact of this technology on vehicle drag. The drag force on tractor/trailers is governed by the generation of eddies, or rotating pockets of air, that are generated in the wake downstream of the trailer. As these unsteady eddies are formed, they create high velocities in the air along the rear of the trailer. High velocities equate to low pressure and the low pressure is responsible for most of the drag force on the trailer. Eddies are formed from each side of the trailer and form at a periodic rate if the trailer is traveling at a constant speed.

Additionally, the present system may be combined with fixed position drag reduction systems such as air dams, trailer skirts etc. to further improve performance.

Table 1 shows the improvements in optimisation characteristic (MPG or L/100km) for an embodiment of the system of the present invention. The data was collected at a constant speed of 105 kilometres per hour (65 miles per hour). Table 1 shows the total number of data points analysed, and the bounds in which the two control surface adjustment parameters were optimised, namely the flap frequency in Hz, i.e. the frequency at which the control surface is deflected, and the trigger delay, i.e. the delay between the threshold condition being satisfied and the control surface being deflected for the first time according to the control surface adjustment parameters.

Table 1. Optimisation Results for Best Design Regions as Number of Data Points Increases

| Total Data Points Analyzed | Flap Frequency /Hz | Trigger Delay /ms | Percent Improvement |
|---|---|---|---|
| 5216 | 1.02-1.21 | 448-548 | 22 .5 |
| 5216 | 1.95-2.22 | 360-455 | 18.3 |
| 5216 | 1.66-1.80 | 339-459 | 14.2 |
| 5216 | 0.66-0.91 | 750-800 | 15.9 |
| 7513 | 1.70-1.87 | 363-483 | 18.2 |
| 8413 | 1.61-1.73 | 279-372 | 17.9 |
| 8413 | 1.03-1.20 | 426-546 | 26.3 |

(continued)

| Total Data Points Analyzed | Flap Frequency /Hz | Trigger Delay /ms | Percent Improvement |
|---|---|---|---|
| 10714 | 0.84-1.03 | 286-351 | 18.9 |
| 10714 | 1.55-1.69 | 287-357 | 14.9 |

As may be appreciated from Table 1, the improvements in MPG (or L/100km) was found to be between 14.2 and 26.3 %, with the best improvements achieved for a flap frequency range of 1.03 to 1.20 Hz and a trigger delay range of 426 to 546 ms. It is noted that these improvements were achieved with a single control surface, and without further control surface adjustment parameters such as the flap magnitude being optimised.

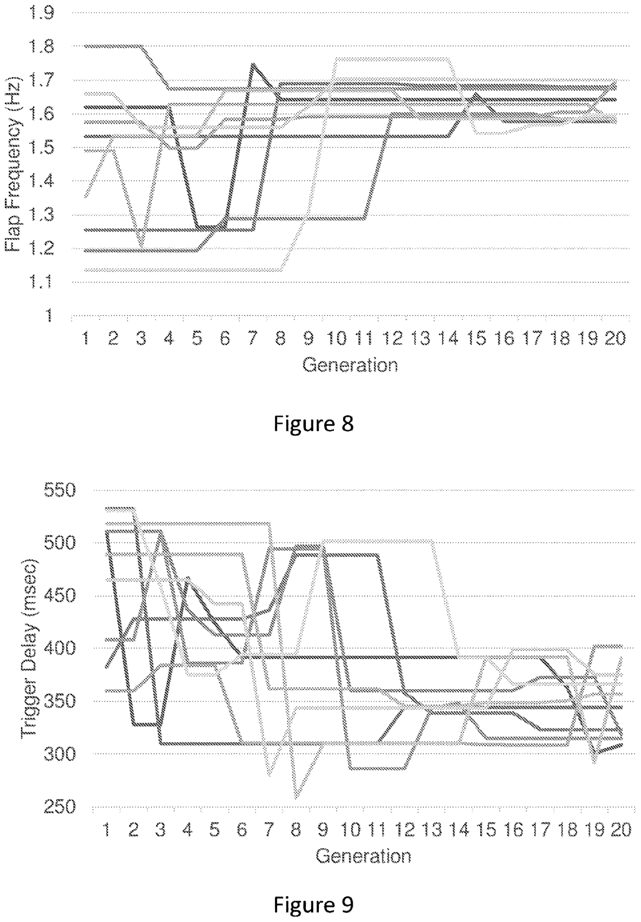

To confirm that the system is continuously improving the design parameters, the convergence of the flap frequency and trigger delay may be compared for successive trial runs. Figures 8 and 9 show that, over 20 generations of different trial runs of the genetic optimisation algorithm, there is significant convergence of flap frequency and trigger delay.

For example, in Figure 8, the average flap frequency of all ten members of each of the twenty generations of the different runs of the differential genetic optimizer is shown. The graph demonstrates a classic convergence for a genetic algorithm, which would not be the case unless the system was functioning properly and there was a true measurable difference in the performance based on the flap frequency and trigger level. If this were not the case, the graph would be more random. As the optimization progresses to the right of the graph, all members of the population continuously converge to a flap frequency in the narrow range of from 1.58 to 1.68 Hz. This corresponds to one of the promising regions listed in the Table 1. Allowing for additional generations may lead to a tighter range.

Similarly, as shown in Figure 9, it is clear that there is also convergence for the trigger delay, as the range from the initial population from 300 to 550 milliseconds is reduced to a final band of 300 to 400 milliseconds.

Both the flap frequency and the trigger delay time required at least 15 generations to converge to a reasonably narrow range. At four seconds per evaluation (to receive sufficient MPG data or L/100km data from the OBD port of the vehicle), for 15 generations having 10 members each, this may require the vehicle to travel up to 80 kilometres (50 miles).

Reducing the time per evaluation may reduce the distance the vehicle is required to travel for the optimisation to work, but the required optimisation may not be achieved and the convergence will be much more difficult to produce.

Drag reduction systems embodying the invention is not only dynamic but also adaptive in that it optimises the parameters according to which the control surfaces 22, 122, 222, 322 is operated, utilizing real-time feedback control and presenting few if any operational issues. In spite of the years of research and expenditures, the system and method described herein is the first to show a substantial decrease in litres per 100 kilometres (increase in miles per gallon) for the long haul trucking industry. This technology could be quickly integrated into existing U.S. trailer fleets and easily installed in new models with minimal added cost to the industry. There is also the very real potential to modify the technology to incorporate it into other makes and models of vehicles.

The system and method embodying the invention are transformational in their beneficial impact on the trucking industry and the reduction in U.S. fuel consumption. Large trucks account for over 12% of the total US petroleum use while delivering over 75% of the nation's goods. At highway speeds, aerodynamic drag accounts for almost 70% of the vehicle energy expenditure. For each percentage point reduction in the drag force, a gain of 0.5% in fuel economy is expected. This may mean that a 40% reduction in vehicle drag force may provide a 20% gain in fuel economy. This in turn, when factored into the total kilometres (miles) driven by large trucks in the United States - on average 209,215 kilometres (130,000 miles) annually - results in an expected fuel consumption reduction of almost 26.5 billion litres (7 billion gallons) of fuel per year, representing over a 3% reduction in required US petroleum imports. The projected savings (over $15 billion per year) resulting from such a gain in fuel economy increases the competitiveness of U.S. truck manufacturers, enables carrier companies to rehire into the over 171,000 positions lost since 2007, and could lower the cost of all goods transported by large trucks. With easy and relatively inexpensive installation on existing vehicles or integration into new trailer production, and by not impeding normal vehicle operation, barriers to entry into the trucking market have been greatly reduced.

A second impact of the successful implementation of the system and method described herein is the reduction in greenhouse gases generated and released to the atmosphere. As the fuel consumption of large vehicles is reduced, so is the production of carbon dioxide as well as nitrous oxide and diesel particulates. A 20% gain in fuel efficiency translates into tens if not hundreds of millions of tons of carbon dioxide per year which is not released into the atmosphere by the combustion process. As the transportation industry accounts for over 27% of greenhouse gas emissions, and this percentage is still increasing each year, the impact of the system and method described herein is both transformational and significant.

Commercial implementation initially will be retrofits of existing trailers and involve hundreds of newly created shops or expanded facilities at many of the existing carrier operations as well as independently owned service facilities. This, in turn, could generate hundreds if not thousands of new jobs. Additionally, the major trailer manufacturers would create new skilled jobs to assemble the active flow control devices and to devise new means of integrating embodiments of the system and method of the invention into new trailer designs that also could incorporate other drag reducing technologies. There is reason to believe that, if successful, embodiments of the invention may also be beneficial to smaller vehicles, perhaps even to the traditional automotive fleet if incorporated into new designs.

While systems and methods embodying the invention have been described herein, it should be understood that these descriptions, along with descriptions of applications or embodiments of such systems and methods, have been provided herein to be illustrative of the invention and its many features. Various modifications may be made by those skilled in the art without departing from the scope of the invention, even if such modifications have not been described herein. Therefore, this disclosure should not be considered as limiting of the underlying invention in any way. Accordingly, the invention embraces alternatives, modifications and variations which fall within the scope of the claims.

Those skilled in the art will readily appreciate that methods and systems of the embodiments of the present invention may include various computer and network related software and hardware, such as programs, operating systems, memory storage devices, input/output devices, processors, servers, data communication links, whether wireless or otherwise, and data transceiving devices, as well as mechanical and electromechanical hardware, such as motors, mounting support, hinges or other equipment as necessary to securely mount and cause the controlled movement action of the control surfaces. Those skilled in the art will further appreciate that the precise types of such software and hardware are not vital to the full implementation of the invention as described herein as exemplified in the disclosed embodiments.

## Claims

1. A drag reduction system (10) for a vehicle, comprising:

   at least one control surface (22, 122a, 122b, 122c, 222a, 222b, 222c, 322) movable relative to at least one surface of the vehicle;
   at least one actuator for adjusting a position of the at least one control surface relative to the at least one surface of the vehicle;
   at least one pressure sensor (12, 112, 212a, 212b, 212c) positioned so as to sense fluid pressure at, or near, a rear end surface of the vehicle; and
   a processor (18) comprising an optimisation algorithm (24), programmed to:

      randomly generate a first generation of control surface adjustment parameters, wherein each one of the control surface adjustment parameters is generated within a pre-defined range;
      receive sensor data from the at least one pressure sensor;
      compare a characteristic of the sensor data to a threshold condition;
      upon the threshold condition being satisfied:

         operate the at least one actuator so to adjust a position of the at least one control surface relative to the at least one surface of the vehicle based on at least two control surface adjustment parameters of the first generation;
         compare an optimisation characteristic of each of the at least two control surface adjustment parameters of the first generation to determine at least one preferred adjustment parameter; and
         populate a second generation of control surface adjustment parameters based on the at least one preferred adjustment parameter;

      or, upon the threshold condition not being satisfied:
         receive new sensor data from the at least one pressure sensor and compare a characteristic of the new sensor data with the threshold condition.

2. A drag reduction system (10) according to claim 1, wherein the processor (18) comprising the optimisation algorithm (24) is further programmed to generate at least two vectors based on at least two of the control surface adjustment parameters of the first generation; and wherein:

   the at least one actuator is operated so to adjust a position of the at least one control surface relative to the at least one surface of the vehicle according to, in turn, each of the at least two vectors;
   an optimisation characteristic of each of the at least two vectors is compared to determine at least one preferred one of the at least two vectors; and

the second generation of control surface adjustment parameters is populated with the at least one preferred one of the at least two vectors;

optionally wherein at least two vectors are generated based on, in turn, each one of the first generation of parameters.

3.  The drag reduction system (10) of claim 2, wherein at least one of the at least two vectors is generated using at least one of: a crossover operation; a combination operation; and a mutation operation; optionally wherein the at least one of the at least two vectors is generated by the crossover operation, wherein the crossover operation is performed on a target vector of a number of randomly selected ones of the first generation parameters and a different one of the first generation parameters.

4.  The drag reduction system (10) according to any one of the preceding claims, wherein the at least one actuator is configured to adjust a position of the at least one control surface (22, 122a, 122b, 122c, 222a, 222b, 222c, 322) relative to the at least one surface of the vehicle between a first position, in which the at least one control surface is substantially parallel to the at least one surface of the vehicle, and a second position in which at least a portion of the at least one control surface extends outwardly from the at least one surface of the vehicle.

5.  The drag reduction system (10) according to any one of the preceding claims, wherein the at least one control surface (22, 122a, 122b, 122c, 222a, 222b, 222c, 322) comprises an elongate control surface, and preferably wherein the elongate control surface is one of: a panel; a tubular control surface; a flap; a wing.

6.  The drag reduction system (10) according to any one of the preceding claims, wherein the optimisation algorithm (24) is a differential genetic optimisation algorithm.

7.  The drag reduction system according to any one of the preceding claims, wherein the at least one control surface (22, 122a, 122b, 122c, 222a, 222b, 222c, 322) is pivotably coupled to the at least one surface of the vehicle; and optionally wherein the at least one actuator adjusts a position of the at least one pivotably coupled control surface from a first position, in which the angle between the at least one control surface and the at least one surface of the vehicle is substantially 0 degrees, and a second position, in which an angle between the at least one control surface and the at least one surface of the vehicle is between about 2 degrees and about 90 degrees.

8.  The drag reduction system (10) according to any one of the preceding claims, wherein:

    the at least one actuator comprises at least one of a motor, a linear solenoid, a rotary solenoid, a linear actuator, a rotary actuator; and/or
    the processor (18) is programmed to repeat for a plurality of generations, wherein each subsequent generation of parameters is based on an immediately preceding generation of parameters.

9.  The drag reduction system (10) of any one of claims 2 to 8, wherein the processor (18) is programmed to repeat for a plurality of generations, wherein each subsequent generation of parameters is based on an immediately preceding generation of parameters; optionally wherein each subsequent generation is populated with a plurality of preferred vectors, wherein each of the plurality of preferred vectors is based on at least one control surface adjustment parameter of the immediately preceding generation of parameters; and further optionally wherein at least two vectors are generated based on, in turn, each control surface adjustment parameter of the immediately preceding generation of parameters.

10. The drag reduction system (10) according to any one of the preceding claims, wherein:

    each generation comprises at least 3 control surface adjustment parameters; and/or
    the threshold condition is related to aerodynamic drag resulting from the vehicle moving through a fluid, in particular air; and/or
    the characteristic comprises at least one of: a tone frequency and a phase; and/or
    each control surface adjustment parameter comprises at least one of:
    a delay between the threshold condition being satisfied and an adjustment of the position of the control surface; a frequency of an adjustment of the position of the control surface; a wave form of the motion of the control surface; the threshold condition; an adjustment speed of each adjustment; a number of adjustments; and/or
    the optimisation characteristic comprises at least one of:

a fuel economy measure; a pressure measure at, or near, a rear surface of the vehicle.

11. The drag reduction system (10) according to any one of the preceding claims, comprising at least one of:

   a plurality of pressure sensors, wherein each one of the plurality of pressure sensors is positioned so as to sense fluid pressure at, or near, the rear end surface of the vehicle; and
   a plurality of pressure sensors, wherein at least one of the plurality of pressure sensors is positioned to sense fluid pressure at, or near, a side surface and/or
   a top surface of the vehicle.

12. The drag reduction system (10) according to any one of the preceding claims, wherein the processor (18) is configured to receive data relating to vehicle operation from the vehicle.

13. A drag reduction method (900) for a vehicle comprising the steps of:

   randomly generating (904) a first generation of control surface adjustment parameters,
   wherein each one of the control surface adjustment parameters is generated within a pre-defined range;
   receiving (910A) sensor data from at least one pressure sensor;
   comparing (910C) a characteristic of the sensor data to a threshold condition;
   upon the threshold condition being satisfied:

      operating (910E) at least one actuator so to adjust a position of at least one control surface relative to at least one surface of the vehicle based on at least two control surface adjustment parameters of the first generation;
      comparing (910F) an optimisation characteristic of each of the at least two control surface adjustment parameters of the first generation to determine at least one preferred adjustment parameter; and
      populating (908) a second generation of control surface adjustment parameters based on the at least one preferred adjustment parameter;

   or, upon the threshold condition not being satisfied:
   receiving (910A) new sensor data from the at least one pressure sensor and compare (910C) a characteristic of the new sensor data with the threshold condition.

14. A vehicle (110, 210) comprising:

   a vehicle body comprising a front end surface and an opposite rear end surface, a top surface, and first and second side surfaces extending between the front end surface and the opposite rear end surface; and
   a drag reduction system (10) for a vehicle comprising:

      at least one control surface (22, 122a, 122b, 122c, 222a, 222b, 222c, 322) movable relative to at least one surface of the vehicle;
      at least one actuator for adjusting a position of the at least one control surface relative to the at least one surface of the vehicle;
      at least one pressure sensor (12, 112, 212a, 212b, 212c) positioned so as to sense fluid pressure at, or near, a rear end surface of the vehicle; and
      a processor (18) comprising an optimisation algorithm (24), programmed to:

         randomly generate a first generation of control surface adjustment parameters, wherein each one of the control surface adjustment parameters is generated within a pre-defined range;
         receive sensor data from the at least one pressure sensor;
         compare a characteristic of the sensor data to a threshold condition;
         upon the threshold condition being satisfied:

            operate the at least one actuator so to adjust a position of the at least one control surface relative to the at least one surface of the vehicle based on at least two control surface adjustment parameters of the first generation;
            compare an optimisation characteristic of each of the at least two control surface adjustment parameters of the first generation to determine at least one preferred adjustment parameter; and

populate a second generation of control surface adjustment parameters based on the at least one preferred adjustment parameter;

or, upon the threshold condition not being satisfied:
receive new sensor data from the at least one pressure sensor and compare a characteristic of the new sensor data with the threshold condition.

15. A vehicle (110, 210) comprising a drag reduction system (10) according to any one of claims 1 to 12.

**Patentansprüche**

1. Widerstandsverringerungssystem (10) für ein Fahrzeug, das Folgendes aufweist:

wenigstens eine Steuerfläche (22, 122a, 122b, 122c, 222a, 222b, 222c, 322), die relativ zu wenigstens einer Oberfläche des Fahrzeugs bewegbar ist;
wenigstens ein Stellglied zum Einstellen einer Stellung der wenigstens einen Steuerfläche relativ zu der wenigstens einen Oberfläche des Fahrzeugs;
wenigstens einen Drucksensor (12, 112, 212a, 212b, 212c), der positioniert ist, um Fluiddruck an oder in der Nähe einer hinteren Endfläche des Fahrzeugs zu erfassen; und
einen Prozessor (18), der einen Optimierungsalgorithmus (24) aufweist, der programmiert ist zum:

zufälligen Generieren einer ersten Generation von Steuerflächeneinstellungsparametern, wobei jeder der Steuerflächeneinstellungsparameter innerhalb eines vordefinierten Bereichs generiert wird;
Empfangen von Sensordaten von dem wenigstens einen Drucksensor;
Vergleichen einer Eigenschaft der Sensordaten mit einer Schwellenbedingung;
bei Erfüllung der Schwellenbedingung:

Betätigen des wenigstens einen Stellglieds zum Einstellen einer Stellung der wenigstens einen Steuerfläche relativ zu der wenigstens einen Oberfläche des Fahrzeugs auf Basis von wenigstens zwei Steuerflächeneinstellungsparametern der ersten Generation;
Vergleichen einer Optimierungseigenschaft von jedem der wenigstens zwei Steuerflächeneinstellungsparameter der ersten Generation zum Bestimmen wenigstens eines bevorzugten Einstellungsparameters; und
Befüllen einer zweiten Generation von Steuerflächeneinstellungsparametern auf Basis des wenigstens einen bevorzugten Einstellungsparameters;

oder, bei Nichterfüllung der Schwellenbedingung:
Empfangen neuer Sensordaten von dem wenigstens einen Drucksensor und Vergleichen einer Eigenschaft der neuen Sensordaten mit der Schwellenbedingung.

2. Widerstandsverringerungssystem (10) nach Anspruch 1, wobei der Prozessor (18), der den Optimierungsalgorithmus (24) aufweist, ferner zum Generieren von wenigstens zwei Vektoren auf Basis von wenigstens zwei der Steuerflächeneinstellungsparameter der ersten Generation programmiert ist; und wobei:

das wenigstens eine Stellglied betätigt wird, um eine Stellung der wenigstens einen Steuerfläche relativ zu der wenigstens einen Oberfläche des Fahrzeugs gemäß, wiederum, jedem der wenigstens zwei Vektoren einzustellen;
eine Optimierungseigenschaft von jedem der wenigstens zwei Vektoren verglichen wird, um wenigstens einen bevorzugten der wenigstens zwei Vektoren zu bestimmen; und
die zweite Generation von Steuerflächeneinstellungsparametern mit dem wenigstens einen bevorzugten der wenigstens zwei Vektoren befüllt wird;
wahlweise, wobei wenigstens zwei Vektoren auf Basis von, wiederum, jedem der ersten Generation von Parametern generiert werden.

3. Widerstandsverringerungssystem (10) nach Anspruch 2, wobei wenigstens einer der wenigstens zwei Vektoren unter Verwendung von wenigstens einem der folgenden generiert wird: einer Kreuzungsoperation; einer Kombinationsoperation; und einer Mutationsoperation; wahlweise, wobei der wenigstens eine der wenigstens zwei Vektoren durch die Kreuzungsoperation generiert wird, wobei die Kreuzungsoperation an einem Zielvektor einer Anzahl zufällig ausgewählter der Parameter der ersten Generation und einem anderen der Parameter der ersten Generations durchgeführt wird.

4. Widerstandsverringerungssystem (10) nach einem der vorhergehenden Ansprüche, wobei das wenigstens eine Stellglied zum Einstellen einer Stellung der wenigstens einen Steuerfläche (22, 122a, 122b, 122c, 222a, 222b, 222c, 322) relativ zu der wenigstens einen Oberfläche des Fahrzeugs zwischen einer ersten Stellung, in der die wenigstens eine Steuerfläche im Wesentlichen parallel zu der wenigstens einen Oberfläche des Fahrzeugs ist, und einer zweiten Stellung, in der wenigstens ein Teil der wenigstens einen Steuerfläche sich von der wenigstens einen Oberfläche des Fahrzeugs nach außen erstreckt, konfiguriert ist.

5. Widerstandsverringerungssystem (10) nach einem der vorhergehenden Ansprüche, wobei die wenigstens eine Steuerfläche (22, 122a, 122b, 122c, 222a, 222b, 222c, 322) eine längliche Steuerfläche aufweist und, vorzugweise, wobei die längliche Steuerfläche eine der folgenden ist: eine Platte; eine rohrförmige Steuerfläche; eine Klappe; ein Flügel.

6. Widerstandsverringerungssystem (10) nach einem der vorhergehenden Ansprüche, wobei der Optimierungsalgorithmus (24) ein differentieller genetischer Optimierungsalgorithmus ist.

7. Widerstandsverringerungssystem (10) nach einem der vorergehenden Ansprüche, wobei die wenigstens eine Steuerfläche (22, 122a, 122b, 122c, 222a, 222b, 222c, 322) schwenkbar mit der wenigstens einen Oberfläche des Fahrzeugs gekoppelt ist; und, wahlweise, wobei das wenigstens eine Stellglied eine Stellung der wenigstens einen schwenkbar gekoppelten Steuerfläche von einer ersten Stellung, in der der Winkel zwischen der wenigstens einen Steuerfläche und der wenigstens einen Oberfläche des Fahrzeugs im Wesentlichen 0 Grad ist, und einer zweiten Stellung, in der ein Winkel zwischen der wenigstens einen Steuerfläche und der wenigstens einen Oberfläche des Fahrzeugs zwischen etwa 2 Grad und etwa 90 Grad ist, verstellt.

8. Widerstandsverringerungssystem (10) nach einem der vorhergehenden Ansprüche, wobei:

   das wenigstens eine Stellglied wenigstens einen von einem Motor, einem Linearhubmagneten, einem Rotations-Elektromagneten, einem Linearantrieb, einem Rotationsantrieb aufweist; und/oder
   der Prozessor (18) so programmiert ist, dass er sich für eine Vielzahl von Generationen wiederholt, wobei jede nachfolgende Generation von Parametern auf einer unmittelbar vorhergehenden Generation von Parametern basiert.

9. Widerstandsverringerungssystem (10) nach einem der Ansprüche 2 bis 8, wobei der Prozessor (18) so programmiert ist, dass er sich für eine Vielzahl von Generationen wiederholt, wobei jede nachfolgende Generation von Parametern auf einer unmittelbar vorhergehenden Generation von Parametern basiert; wahlweise, wobei jede nachfolgende Generation mit einer Vielzahl bevorzugter Vektoren befüllt wird, wobei jeder der Vielzahl von bevorzugten Vektoren auf wenigstens einem Steuerflächeneinstellungsparameter der unmittelbar vorhergehenden Generation von Parametern basiert; und, ferner wahlweise, wobei wenigstens zwei Vektoren auf Basis von, wiederum, jedem Steuerflächeneinstellungsparameter der unmittelbar vorhergehenden Generation von Parametern generiert werden.

10. Widerstandsverringerungssystem (10) nach einem der vorhergehenden Ansprüche, wobei:

   jede Generation wenigstens 3 Steuerflächeneinstellungsparameter aufweist; und/oder
   die Schwellenbedingung mit aerodynamischem Widerstand in Beziehung steht, der sich aus der Bewegung des Fahrzeugs durch ein Fluid, insbesondere Luft, ergibt; und/oder
   die Eigenschaft wenigstens eine der folgenden aufweist: eine Tonfrequenz und eine Phase; und/oder
   jeder Steuerflächeneinstellungsparameter wenigstens eines der folgenden aufweist:

      eine Verzögerung zwischen der Erfüllung der Schwellenbedingung und einer Einstellung der Stellung der Steuerfläche; eine Frequenz einer Einstellung der Stellung der Steuerfläche; eine Wellenform der Bewegung der Steuerfläche; die Schwellenbedingung; eine Einstellungsgeschwindigkeit jeder Einstellung; eine Anzahl von Einstellungen; und/oder

   die Optimierungseigenschaft wenigstens eines der folgenden aufweist:

eine Kraftstoffverbrauchsmessung; eine Druckmessung an oder in der Nähe einer hinteren Oberfläche des Fahrzeugs.

11. Widerstandsverringerungssystem (10) nach einem der vorhergehenden Ansprüche, das wenigstens eines der folgenden aufweist:

eine Vielzahl von Drucksensoren, wobei jeder der Vielzahl von Drucksensoren so positioniert ist, dass er Fluiddruck an oder in der Nähe der hinteren Endfläche des Fahrzeugs erfasst; und
eine Vielzahl von Drucksensors, wobei wenigstens einer der Vielzahl von Drucksensoren zum Erfassen von Fluiddruck an oder in der Nähe einer Seitenfläche und/oder einer Oberseitenflächen des Fahrzeugs positioniert ist.

12. Widerstandsverringerungssystem (10) nach einem der vorhergehenden Ansprüche, wobei der Prozessor (18) zum Empfangen von Daten, die mit dem Fahrzeugbetrieb in Beziehung stehen, von dem Fahrzeug konfiguriert ist.

13. Widerstandsverringerungsverfahren (900) für ein Fahrzeug, das die folgenden Schritte aufweist:

zufälliges Generieren (904) einer ersten Generation von Steuerflächeneinstellungsparametern, wobei jeder der Steuerflächeneinstellungsparameter innerhalb eines vordefinierten Bereichs generiert wird;
Empfangen (910A) von Sensordaten von dem wenigstens einen Drucksensor;
Vergleichen (910C) einer Eigenschaft der Sensordaten mit einer Schwellenbedingung;
bei Erfüllung der Schwellenbedingung:

Betätigen (910E) des wenigstens einen Stellglieds zum Einstellen einer Stellung von wenigstens einer Steuerfläche relativ zu wenigstens einer Oberfläche des Fahrzeugs auf Basis von wenigstens zwei Steuerflächeneinstellungsparametern der ersten Generation;
Vergleichen (910F) einer Optimierungseigenschaft von jedem der wenigstens zwei Steuerflächeneinstellungsparameter der ersten Generation zum Bestimmen wenigstens eines bevorzugten Einstellungsparameters; und
Befüllen (908) einer zweiten Generation von Steuerflächeneinstellungsparametern auf Basis des wenigstens einen bevorzugten Einstellungsparameters;

oder, bei Nichterfüllung der Schwellenbedingung:

Empfangen (910A) neuer Sensordaten von dem wenigstens einen Drucksensor und
Vergleichen (910C) einer Eigenschaft der neuen Sensordaten mit der Schwellenbedingung.

14. Fahrzeug (110, 210), das Folgendes aufweist:

einen Fahrzeugaufbau, der eine vordere Endfläche und eine entgegengesetzte hintere Endfläche aufweist, eine Oberseitenfläche und eine erste und eine zweite Seitenfläche, die sich zwischen der vorderen Endfläche und der entgegengesetzten hinteren Endfläche erstrecken; und
ein Widerstandsverringerungssystem (10) für ein Fahrzeug, das Folgendes aufweist:

wenigstens eine Steuerfläche (22, 122a, 122b, 122c, 222a, 222b, 222c, 322), die relativ zu wenigstens einer Oberfläche des Fahrzeugs bewegbar ist;
wenigstens ein Stellglied zum Einstellen einer Stellung der wenigstens einen Steuerfläche relativ zu der wenigstens einen Oberfläche des Fahrzeugs;
wenigstens einen Drucksensor (12, 112, 212a, 212b, 212c), der positioniert ist, um Fluiddruck an oder in der Nähe einer hinteren Endfläche des Fahrzeugs zu erfassen; und
einen Prozessor (18), der einen Optimierungsalgorithmus (24) aufweist, der programmiert ist zum:

zufälligen Generieren einer ersten Generation von Steuerflächeneinstellungsparametern, wobei jeder der Steuerflächeneinstellungsparameter innerhalb eines vordefinierten Bereichs generiert wird;
Empfangen von Sensordaten von dem wenigstens einen Drucksensor;
Vergleichen einer Eigenschaft der Sensordaten mit einer Schwellenbedingung;
bei Erfüllung der Schwellenbedingung:

Betätigen des wenigstens einen Stellglieds zum Einstellen einer Stellung der wenigstens einen Steuerfläche relativ zu der wenigstens einen Oberfläche des Fahrzeugs auf Basis von wenigstens zwei Steuerflächeneinstellungsparametern der ersten Generation;

Vergleichen einer Optimierungseigenschaft von jedem der wenigstens zwei Steuerflächeneinstellungsparameter der ersten Generation zum Bestimmen wenigstens eines bevorzugten Einstellungsparameters; und

Befüllen einer zweiten Generation von Steuerflächeneinstellungsparametern auf Basis des wenigstens einen bevorzugten Einstellungsparameters;

oder, bei Nichterfüllung der Schwellenbedingung:

Empfangen neuer Sensordaten von dem wenigstens einen Drucksensor und Vergleichen einer Eigenschaft der neuen Sensordaten mit der Schwellenbedingung.

**15.** Fahrzeug (110, 210), das ein Widerstandsverringerungssystem (10) nach einem der Ansprüche 1 bis 12 aufweist.

## Revendications

**1.** Système de réduction de traînée (10) pour un véhicule, comprenant :

au moins une surface de contrôle (22, 122a, 122b, 122c, 222a, 222b, 222c, 322) amovible par rapport à au moins une surface du véhicule ;

au moins un actionneur pour ajuster une position de la au moins une surface de contrôle par rapport à la au moins une surface du véhicule ;

au moins un capteur de pression (12, 112, 212a, 212b, 212c) positionné de manière à détecter une pression de fluide à, ou près d'une surface d'extrémité arrière du véhicule ; et

un processeur (18) comprenant un algorithme d'optimisation (24), programmé pour :

générer de manière aléatoire une première génération de paramètres d'ajustement de surface de contrôle, dans lequel chacun des paramètres d'ajustement de la surface de contrôle est généré dans une plage prédéfinie ;

recevoir des données de capteur du au moins un capteur de pression ;

comparer une caractéristique des données de capteur à une condition seuil ;

lorsque la condition seuil est satisfaite :

faire fonctionner le au moins un actionneur de manière à ajuster une position de la au moins une surface de contrôle par rapport à la au moins une surface du véhicule sur la base d'au moins deux paramètres d'ajustement de surface de contrôle de la première génération ;

comparer une caractéristique d'optimisation de chacun des au moins deux paramètres d'ajustement de surface de contrôle de la première génération afin de déterminer au moins un paramètre d'ajustement préféré ; et

remplir une deuxième génération de paramètres d'ajustement de surface de contrôle sur la base du au moins un paramètre d'ajustement préféré ;

ou bien, lorsque la condition seuil n'est pas satisfaite :

recevoir de nouvelles données de capteur du au moins un capteur de pression et comparer une caractéristique des nouvelles données de capteur à la condition seuil.

**2.** Système de réduction de traînée (10) selon la revendication 1, dans lequel le processeur (18) comprenant l'algorithme d'optimisation (24) est programmé en outre pour générer au moins deux vecteurs sur la base d'au moins deux paramètres d'ajustement de surface de contrôle de la première génération, et dans lequel

le au moins un actionneur est actionné de manière à ajuster une position de la au moins une surface de contrôle par rapport à la au moins une surface du véhicule conformément à chacun des au moins deux vecteurs à leur tour ;

une caractéristique d'optimisation de chacun des au moins deux vecteurs est comparée afin de déterminer au moins l'un préféré des au moins deux vecteurs ; et

la deuxième génération de paramètres d'ajustement de surface de contrôle est remplie avec le au moins un préféré des au moins deux vecteurs ;

optionnellement dans lequel au moins deux vecteurs sont générés sur la base, à leur tour, de chacun de la première génération de paramètres.

3. Système de réduction de traînée (10) selon la revendication 2, dans lequel au moins l'un des au moins deux vecteurs est généré en utilisant au moins l'une d'entre : une opération de croisement ; une opération de combinaison et une opération de mutation ; optionnellement dans lequel au moins l'un des au moins deux vecteurs est généré par l'opération de croisement, dans lequel l'opération de croisement est effectuée sur un vecteur cible d'un nombre de paramètres sélectionnés au hasard des paramètres de la première génération et d'un paramètre différent des paramètres de la première génération.

4. Système de réduction de traînée (10) selon l'une quelconque des revendications précédentes, dans lequel le au moins un actionneur est configuré pour ajuster une position de la au moins une surface de contrôle (22, 122a, 122b, 122c, 222a, 222b, 222c, 322) par rapport à la au moins une surface du véhicule entre une première position, dans laquelle la au moins une surface de contrôle est sensiblement parallèle à la au moins une surface du véhicule, et une deuxième position dans laquelle au moins une partie de la au moins une surface de contrôle s'étend vers l'extérieur de la au moins une surface du véhicule.

5. Système de réduction de traînée (10) selon l'une quelconque des revendications précédentes, dans lequel la au moins une surface de contrôle (22, 122a, 122b, 122c, 222a, 222b, 222c, 322) comprend une surface de contrôle allongée, et de préférence dans lequel la surface de contrôle allongée est l'un d'entre : un panneau, une surface de contrôle tubulaire ; un volet ; une aile.

6. Système de réduction de traînée (10) selon l'une quelconque des revendications précédentes, dans lequel l'algorithme d'optimisation (24) est un algorithme d'optimisation génétique à évolution différentielle.

7. Système de réduction de traînée selon l'une quelconque des revendications précédentes, dans lequel la au moins une surface de contrôle (22, 122a, 122b, 122c, 222a, 222b, 222c, 322) est couplée de manière pivotante à la au moins une surface du véhicule, et optionnellement dans lequel le au moins un actionneur ajuste une position de la au moins une surface de contrôle couplée de manière pivotante d'une première position, dans laquelle l'angle entre la au moins une surface de contrôle et la au moins une surface du véhicule est sensiblement de 0 degré, et une deuxième position, dans laquelle un angle entre la au moins une surface de contrôle et la au moins une surface du véhicule est d'entre environ 2 degrés et environ 90 degrés.

8. Système de réduction de traînée (10) selon l'une quelconque des revendications précédentes, dans lequel :

   le au moins un actionneur comprend au moins l'un d'entre un moteur, un solénoïde linéaire, un solénoïde rotatif, un actionneur linéaire, un actionneur rotatif, et/ou
   le processeur (18) est programmé pour se répéter pour une pluralité de générations,
   dans lequel chaque génération subséquente de paramètres est basée sur une génération de paramètres immédiatement précédente.

9. Système de réduction de traînée (10) selon l'une quelconque des revendications 2 à 8, dans lequel le processeur (18) est programmé pour se répéter pour une pluralité de générations, dans lequel chaque génération subséquente de paramètres est basée sur une génération de paramètres immédiatement précédente ; optionnellement dans lequel chaque génération subséquente est remplie d'une pluralité de vecteurs préférés, dans lequel chacun de la pluralité de vecteurs préférés est basé sur au moins un paramètre d'ajustement de surface de contrôle de la génération de paramètres immédiatement précédente ; et dans lequel optionnellement en outre au moins deux vecteurs sont générés sur la base, à leur tour, de chaque paramètre d'ajustement de surface de contrôle de la génération de paramètres immédiatement précédente.

10. Système de réduction de traînée (10) selon l'une quelconque des revendications précédentes, dans lequel :

   chaque génération comprend au moins 3 paramètres d'ajustement de surface de contrôle ; et/ou
   la condition seuil est associée à la traînée aérodynamique résultant du véhicule se déplaçant à travers un fluide, en particulier de l'air ; et/ou
   la caractéristique comprend au moins l'une d'entre : une fréquence de tonalité et une phase ; et/ou
   chaque paramètre d'ajustement de surface de contrôle comprend au moins l'un d'entre :
   un délai entre la condition seuil étant satisfaite et un ajustement de la position de la surface de contrôle ; une fréquence d'un ajustement de la position de la surface de contrôle ; une forme d'onde du mouvement de la surface de contrôle ; la condition seuil ; une vitesse d'ajustement de chaque ajustement, un nombre d'ajustements ; et/ou

la caractéristique d'optimisation comprend au moins l'une d'entre :

une mesure d'économie de carburant ; une mesure de pression à ou près d'une surface arrière du véhicule.

11. Système de réduction de traînée (10) selon l'une quelconque des revendications précédentes, comprenant au moins l'une d'entre :

une pluralité de capteurs de pression, dans lequel chacun de la pluralité de capteurs de pression est positionné de manière à détecter une pression de fluide à ou près de la surface d'extrémité arrière du véhicule ; et une pluralité de capteurs de pression, dans lequel au moins l'un de la pluralité de capteurs de pression est positionné pour détecter une pression de fluide à ou près d'une surface latérale et/ou d'une surface supérieure du véhicule.

12. Système de réduction de traînée (10) selon l'une quelconque des revendications précédentes, dans lequel le processeur (18) est configuré pour recevoir du véhicule des données concernant le fonctionnement du véhicule.

13. Procédé de réduction de traînée (900) pour un véhicule comprenant les étapes consistant à :

générer de manière aléatoire (904) une première génération de paramètres d'ajustement de surface de contrôle, dans lequel chacun des paramètres d'ajustement de surface de contrôle est généré dans une plage prédéfinie ; recevoir (910A) des données de capteur d'au moins un capteur de pression ; comparer (910C) une caractéristique des données de capteur à une condition seuil ; lorsque la condition seuil est satisfaite :

faire fonctionner (910E) au moins un actionneur de manière à ajuster une position d'au moins une surface de contrôle par rapport à au moins une surface du véhicule sur la base d'au moins deux paramètres d'ajustement de surface de contrôle de la première génération ;

comparer (910F) une caractéristique d'optimisation de chacun des au moins deux paramètres d'ajustement de surface de contrôle de la première génération afin de déterminer au moins un paramètre d'ajustement préféré ; et remplir (908) une deuxième génération de paramètres d'ajustement de surface de contrôle sur la base du au moins un paramètre d'ajustement préféré ;

ou bien, lorsque la condition seuil n'est pas satisfaite : recevoir (910A) de nouvelles données de capteur du au moins un capteur de pression et comparer (910C) une caractéristique des nouvelles données de capteur à la condition seuil.

14. Véhicule (110, 210) comprenant :

une carrosserie de véhicule comprenant une surface d'extrémité avant et une surface d'extrémité arrière opposée, une surface supérieure, une première et une deuxième surface latérale s'étendant entre la surface d'extrémité avant et la surface d'extrémité arrière opposée ; et un système de réduction de traînée (10) pour un véhicule comprenant :

au moins une surface de contrôle (22, 122a, 122b, 122c, 222a, 222b, 222c, 322) amovible par rapport à au moins une surface du véhicule ; au moins un actionneur pour ajuster une position de la au moins une surface de contrôle par rapport à la au moins une surface du véhicule ; au moins un capteur de pression (12, 112, 212a, 212b, 212c) positionné de manière à détecter une pression de fluide à, ou près d'une surface d'extrémité arrière du véhicule ; et un processeur (18) comprenant un algorithme d'optimisation (24), programmé pour :

générer de manière aléatoire une première génération de paramètres d'ajustement de surface de contrôle, dans lequel chacun des paramètres d'ajustement de la surface de contrôle est généré dans une plage prédéfinie ;

recevoir des données de capteur du au moins un capteur de pression ;
comparer une caractéristique des données de capteur à une condition seuil ;
lorsque la condition seuil est satisfaite :

faire fonctionner le au moins un actionneur de manière à ajuster une position de la au moins une surface de contrôle par rapport à la au moins une surface du véhicule sur la base d'au moins deux paramètres d'ajustement de surface de contrôle de la première génération ;
comparer une caractéristique d'optimisation de chacun des au moins deux paramètres d'ajustement de surface de contrôle de la première génération afin de déterminer au moins un paramètre d'ajustement préféré ; et
remplir une deuxième génération de paramètres d'ajustement de surface de contrôle sur la base du au moins un paramètre d'ajustement préféré ;

ou bien, lorsque la condition seuil n'est pas satisfaite :
recevoir de nouvelles données de capteur du au moins un capteur de pression et comparer une caractéristique des nouvelles données de capteur à la condition seuil.

15. Véhicule (110, 210) comprenant un système de réduction de traînée (10) selon l'une quelconque des revendications 1 à 12.

Figure 1

Figure 2

Figure 3

322

330

Figure 4

322

330

Figure 5

822

722

622

522

422

Figure 6

Figure 7A

Figure 7B

Figure 7C

Figure 7D

Figure 8

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9937963 B2
- DE 102018206305 A1
- WO 2019155181 A1
- WO 2017072530 A1